(19) Europäisches Patentamt / European Patent Office / Office européen des brevets

(11) **EP 3 763 116 B1**

(12) **FASCICULE DE BREVET EUROPEEN**

(45) Date de publication et mention
de la délivrance du brevet:
**05.01.2022 Bulletin 2022/01**

(21) Numéro de dépôt: **19708961.8**

(22) Date de dépôt: **20.02.2019**

(51) Int Cl.:
*H04N 9/04* (2006.01)    *G06T 3/40* (2006.01)

(86) Numéro de dépôt international:
**PCT/EP2019/054222**

(87) Numéro de publication internationale:
**WO 2019/170420 (12.09.2019 Gazette 2019/37)**

(54) **PROCEDE DE RECONSTRUCTION D'UNE IMAGE COULEUR ACQUISE PAR UN CAPTEUR RECOUVERT D'UNE MOSAÏQUE DE FILTRES COULEURS**

VERFAHREN ZUR REKONSTRUKTION EINES DURCH EINEN MIT EINEM FARBFILTERMOSAIK BEDECKTEN BILDSENSOR ERHALTENEN FARBBILDES

PROCESS OF RECONSTRUCTING A COLOR IMAGE ACQUIRED BY AN IMAGE SENSOR COVERED WITH A COLOR FILTER MOSAIC

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.03.2018 FR 1851978**

(43) Date de publication de la demande:
**13.01.2021 Bulletin 2021/02**

(73) Titulaire: **Centre national de la recherche scientifique**
**75016 Paris (FR)**

(72) Inventeurs:
• **ALLEYSSON, David**
**38430 MOIRANS (FR)**
• **AMBA, Prakhar**
**38000 Grenoble (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**EP-A1- 2 561 681    EP-A2- 2 160 904**
**US-B1- 7 149 262**

• **TRUSSELL H J ET AL: "Mathematics for Demosaicking", IEEE TRANSACTIONS ON IMAGE PROCESSING, IEEE SERVICE CENTER, PISCATAWAY, NJ, US, vol. 11, no. 4, 1 avril 2002 (2002-04-01), XP011074253, ISSN: 1057-7149**

**Description**

**Domaine technique**

L'invention se situe dans le domaine du traitement d'images acquises par une caméra mono-capteur. Plus particulièrement l'invention concerne la reconstruction d'images couleurs après leur acquisition par un capteur recouvert par un filtre composé d'une mosaïque de filtres de plusieurs couleurs.

**Etat de la technique**

De manière générale, une caméra comprend au moins un objectif composé d'un ou plusieurs composants optiques tels des lentilles. L'objectif de la caméra dirige la lumière captée vers un capteur composé de cellules photosensibles. Sur le capteur, un ou plusieurs filtres de couleurs sont appliqués afin de permettre la reconstitution du spectre de la lumière reçue par le capteur.

Une caméra peut en outre comprendre sur le chemin optique entre l'objectif et le capteur un ou tous les composants parmi : un filtre qui coupe l'infrarouge (IRcut), un filtre optique spatial passe-bas (OLP), des micros-lentilles chargées de focaliser la lumière vers chaque cellule du capteur.

Une caméra peut être un appareil photographique ou tout autre moyen apte à capter une image et disposant d'un capteur photosensible muni d'une matrice de filtres de couleur, appelée mosaïque.

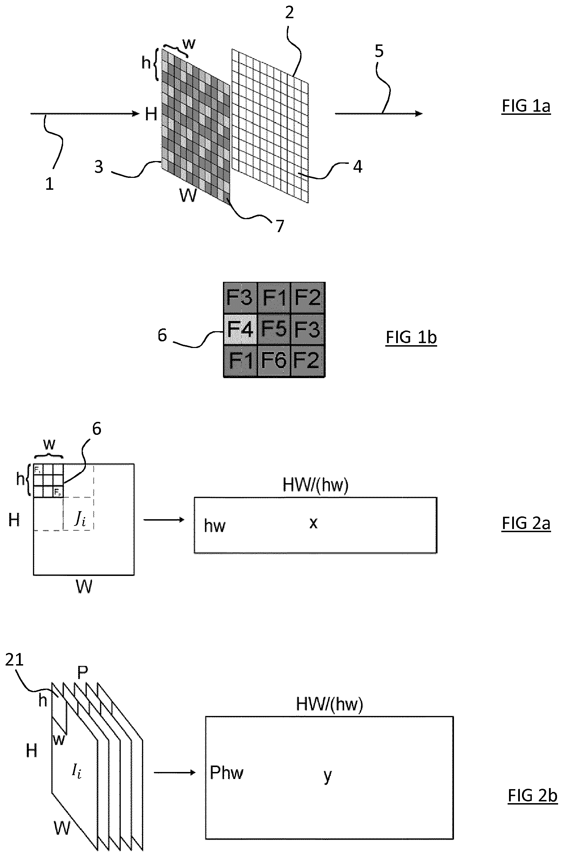

Le principe général de l'acquisition d'une image couleur 1 par un premier capteur photosensible 2 à travers une première mosaïque de filtres 3 est représenté sur la figure 1a. La première mosaïque de filtres 3 donne à chaque pixel 4 du premier capteur 2 une sensibilité spectrale différente pour permettre une représentation fidèle de la couleur sur l'image rendue. Chaque pixel 4 du premier capteur 2 représente un photosite du premier capteur 2. Chaque photosite est une cellule photoélectrique sensible à l'intensité lumineuse, dans une certaine gamme de longueur d'onde, qu'il traduit en produisant un faible courant électrique relatif à sa sensibilité spectrale.

La figure la montre un exemple d'une matrice de filtres composée d'une première mosaïque de filtres 3 de couleurs différentes. L'exemple représente une première matrice de filtres 3 de taille $H \times W$ comprenant six filtres de couleurs différentes agencés selon un premier motif de base 6 dont un exemple est présenté sur la figure 1b. Le premier motif de base 6, de dimensions $h \times w$, est répété de façon à couvrir l'ensemble de la première mosaïque de filtres 3 sans qu'il y ait de recouvrement entre deux motifs de base.

L'image couleur acquise 5 est une image à $P$ composantes de couleurs, c'est-à-dire à $P$ couleurs. Les $P$ composantes de couleurs sont, dans l'exemple représenté sur la figure 1b, les couleurs de six filtres F1, F2, F3, F4, F5, F6. Les six filtres F1, F2, F3, F4, F5, F6 sont agencés dans le premier motif de base 6 de taille $3 \times 3$. La lumière véhiculant l'image couleur à acquérir 1 passe au travers de la première matrice de filtres 3 avant d'arriver sur le premier capteur 2 présenté sur la figure la sous la forme d'une matrice de pixels. La première matrice de filtres 3 est agencée pour couvrir entièrement le premier capteur 2 de taille $H \times W$.

La reconstruction d'une image après son acquisition par le premier capteur 2 recouvert de la première mosaïque de filtres 3 utilise un procédé dit de démosaïçage ou dématriçage. Chaque pixel 4 étant recouvert d'un filtre d'une couleur particulière une seule couleur se trouve échantillonnée par pixel. Il est donc nécessaire de mettre en place un procédé pour reconstruire la composition en couleurs de la lumière reçue par chaque pixel 4. À cette fin, un procédé de démosaïçage est mis en œuvre. Le procédé de démosaïçage consiste notamment en une interpolation des chrominances des différents pixels 4. Le procédé de démosaïçage utilise une matrice de démosaïçage appliquée sur l'image brute 5 produite par le premier capteur 2. Par image brute 5 on entend les données sortant directement du premier capteur 2 après acquisition de l'image couleur 1.

La construction d'une matrice de démosaïçage est réalisée au cours d'un processus d'apprentissage utilisant une base de données d'images de référence. La base de données d'images de référence peut comprendre $N$ images de références $I_i$, $i \in [1,...,N]$ à $P$ composantes. A partir de la base de données d'images de référence, on construit une nouvelle base de données de $N$ images simulées $J_i$. À chaque image de référence $I_i$ correspond une image simulée $J_i$. Les images simulées $J_i$ représentent une modélisation des images brutes 5 produites par le premier capteur 2 après acquisition des images de la base de données d'images de référence par ledit premier capteur 2. Les images simulées $J_i$ sont obtenues en partant des images de références $I_i$ et en supprimant de celles-ci les composantes de couleur qui ne sont pas mesurées par le premier capteur 2. En pratique, si l'image de référence $I_i$ possède $P$ composantes, dans l'image simulée $J_i$ on garde uniquement la composante du filtre positionné sur chaque pixel du premier capteur 2. L'image simulée $J_i$ comprend alors un unique plan. Les images simulées $J_i$ des images brutes 5 issues du premier capteur 2 sont nommées par la suite images mosaïque 5, et les images $I_i$ provenant de la base de données de référence sont nommées images résolues.

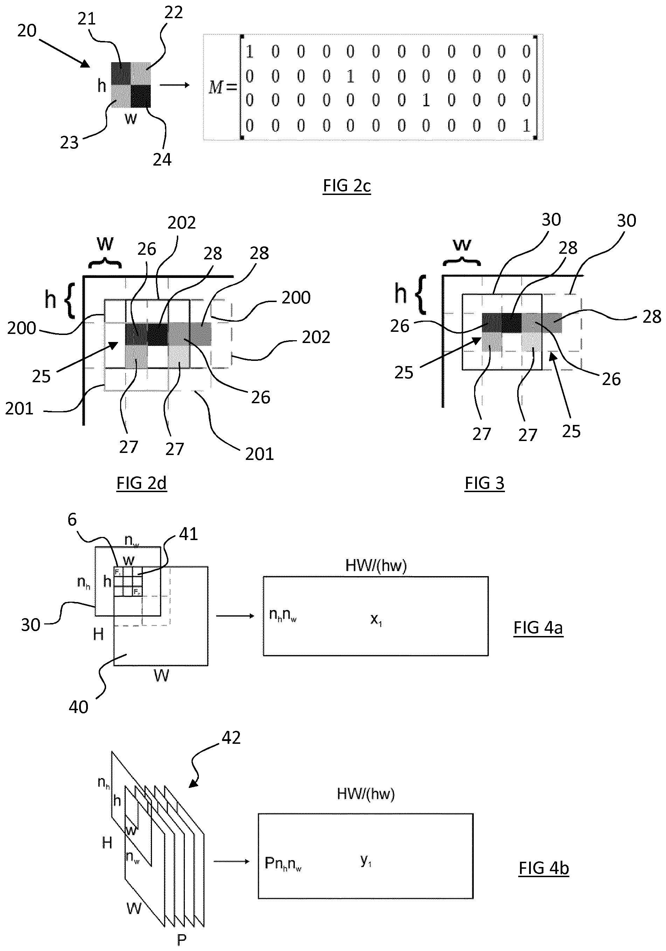

La figure 2a représente un exemple d'une transformation d'une image mosaïque $J_i$ en une matrice de vecteurs $x$. La figure 2b représente un exemple d'une transformation d'une image résolue $I_i$ en une matrice de vecteurs $y$ représentant l'image couleur. L'image mosaïque $J_i$ est composée, tel que représenté sur la figure 2a, d'un ensemble de motifs de base de taille $h \times w$. La matrice de vecteurs $x$ de l'image mosaïque $J_i$ comprend $HW/(hw)$ vecteurs de taille $hw$. L'image résolue $I_i$ comprend $P$ composantes, chaque composante correspondant à l'une des $P$ couleurs. Chaque composante de l'image résolue $I_i$ est une image d'une taille équivalente à la taille $H \times W$ de la première mosaïque de filtres 3. Chaque composante de l'image résolue $I_i$ peut être découpée selon un motif dont la taille est équivalente à la taille du premier motif de base 6 de la première mosaïque de filtres 3 : $h \times w$. Il est ainsi possible de définir une matrice de vecteurs $y$ représentant une image résolue $I_i$, construite avec $HW/(hw)$ vecteurs de taille $Phw$.

Le modèle de calcul de l'image mosaïque $J_i$ à partir de l'image résolue $I_i$ peut s'exprimer ainsi :

$$x = My \qquad (1000)$$

avec $M$ une matrice de taille $hw \times Phw$.

La figure 2c représente un exemple d'une matrice $M$ créée pour un filtre réalisé à partir d'un deuxième motif de base 20 d'une matrice de Bayer de taille $2 \times 2$ comprenant les filtres des couleurs suivantes : un premier filtre rouge 21, un deuxième filtre vert 22, un troisième filtre vert 23 et un quatrième filtre bleu 24. La matrice $M$ obtenue pour ce motif est donc de taille $4 \times 12$. La matrice $M$ est composée de « 0 » et de « 1 ». Chaque composante de la matrice $M$ ayant la valeur « 1 » représente une cellule du deuxième motif de base 20 de la matrice de Bayer. Pour obtenir le démosaïçage, il est connu de l'état de la technique d'utiliser une matrice dite de démosaïçage $D$ définie par la méthode des moindres carrées, appliquée à l'ensemble des matrices de vecteurs $(x ; y)$ représentant respectivement les images mosaïques $J_i$ et les images résolues $I_i$. La matrice de démosaïçage $D$ ne peut être obtenue en inversant simplement la matrice $M$. En effet, même si une inversion de la matrice $M$ peut être réalisée en utilisant une méthode du type pseudo inverse, cette opération produit une matrice $D$ donnant de mauvais résultats dans le procédé de démosaïçage.

La matrice de démosaïçage $D$ peut donc être calculée de la manière suivante :

$$D = E^{i=1..N}\{yx^T(xx^T)^{-1}\} \qquad (1001)$$

$E^{i=1..N}$ représentant l'espérance mathématique sur les $N$ images de la base de données de référence comparées avec les $N$ images de la base de données des images simulées. La matrice de démosaïçage $D$ ainsi calculée est de taille $Phw \times hw$.

À partir de la matrice de démosaïçage $D$ calculée, il est possible de déterminer une matrice de vecteurs $\tilde{y}$ qui est une estimation de l'image reconstruite d'après l'image mosaïque issue du premier capteur 2.

$$\tilde{y} = Dx \qquad (1002)$$

Ensuite, pour reconstruire l'image couleur à $P$ composantes, il suffit de transformer la matrice de vecteurs $\tilde{y}$ en une image à $P$ composantes, chaque composante correspondant à l'une des $P$ couleurs, cette transformation est l'opération inverse de l'opération représentée sur la figure 2b. Chaque composante est ainsi une image d'une taille correspondant à la taille $H \times W$ de l'image mosaïque.

Un des problèmes de cette méthode de reconstruction d'images couleur est que l'image à reconstruire est de taille supérieure à la taille de l'image couleur captée 1. Le modèle utilisé pour la reconstruction d'images réalise alors une interpolation de $P$ couleurs pour un pixel à partir d'une seule information de couleur, celle du pixel. Il en résulte une grande instabilité de la matrice $D$ ainsi calculée et donc une mauvaise qualité de reconstruction de l'image couleur.

L'état de la technique propose de réaliser une interpolation à partir d'un voisinage de chaque pixel de la matrice mosaïque afin d'en déterminer la couleur. Une telle interpolation permet de renforcer la stabilité de l'estimation de la matrice de démosaïçage $D$. Il a été proposé dans les demandes de brevet FR2959092 et FR2917559 d'utiliser, pour réaliser cette interpolation, un voisinage dit glissant tel que représenté sur la figure 2d. La figure 2d représente une partie d'une matrice mosaïque produite par un deuxième capteur. Le motif de base de taille $h \times w$ utilisé pour l'exemple représenté sur la figure 2d est un quatrième motif de base 25 de taille $2 \times 2$ d'une mosaïque de Bayer. Le quatrième motif de base 25 comprend quatre pixels de couleur différentes : rouge 26, vert 27 et bleu 28. Pour simplifier la représentation, un des pixels du quatrième motif de base 25 est laissé blanc. Chaque pixel 26, 27, 28 possède son propre voisinage de pixels de taille $3 \times 3$ dont il est le centre. Par exemple le premier pixel rouge 26 est au centre d'un premier voisinage de pixels 200 ; le deuxième pixel 27 vert est au centre d'un deuxième voisinage 201 ; le troisième pixel 28 bleu est au centre d'un troisième voisinage 202. Le deuxième pixel 27 est situé sur la même colonne mais dans la ligne inférieure par rapport au premier pixel 26. Ainsi le deuxième voisinage 201 est une translation d'un pixel vers le bas du premier voisinage 200. Le troisième pixel 28 est situé sur la même ligne mais dans la colonne à droite par rapport au premier pixel 26. Ainsi le troisième voisinage 202 est une translation d'un pixel vers la droite du premier voisinage 200. Tous les pixels d'un même motif de base ont donc un voisinage différent. Lors du passage d'un motif de base à un autre motif de base sur la matrice mosaïque, le voisinage de chaque pixel « suit » le pixel dans sa translation d'un motif à l'autre.

Lors de la reconstitution de l'image, la couleur de chaque pixel peut donc être reconstituée en fonction des couleurs des pixels de son voisinage. Ainsi, la matrice D est définie en intégrant les voisinages de chaque pixel de la manière suivante : dans la construction des matrices de vecteurs x, y chaque pixel est augmenté de son voisinage et donc les différents voisinages de chaque pixel sont également stockés dans les matrices de vecteurs x, y. La prise en compte des voisinages dans le calcul des matrices de démosaïçage, si elle permet d'avoir une meilleure reconstitution de l'image, possède l'inconvénient de devoir manipuler des matrices plus grandes et donc nécessite des moyens de calculs et de stockage de données importants.

## Résumé de l'invention

Un objectif de l'invention est notamment de proposer une amélioration des méthodes connues de calcul d'une matrice de démosaïçage. Un autre objectif de l'invention est d'utiliser cette amélioration afin de proposer une optimisation des mosaïques de filtres associées aux capteurs.

La présente invention propose à cette fin un procédé de reconstruction d'une image couleur, acquise par un capteur photosensible de taille $H \times W$, recouvert d'une mosaïque, de taille $H \times W$, de $P$ filtres de différentes couleurs composant un motif de base de taille $h \times w$ tel que $h < H$ et $w < W$. Ledit motif de base de la mosaïque de filtres se répète de façon à couvrir la mosaïque de filtres sans recouvrement entre les motifs de base. Ledit procédé est mis en œuvre par ordinateur. Ledit procédé comprend au moins les étapes suivantes :

- une première étape préalable de construction d'une matrice de démosaïçage $D$ à partir d'une simulation utilisant une première base de données de $N$ images $I_i$, $i \in [1,...,N]$, à $P$ composantes de couleurs, dites images de référence, pour produire une deuxième base de données de $N$ images $J_i$, $i \in [1,...,N]$ simulant des images rendues issues du capteur, après acquisition par ledit capteur des images de la première base de données, lesdites images de référence $I_i$ et rendues $J_i$ étant respectivement représentées sous la forme de matrices de $HW/(hw)$ vecteurs $y_1$, $x_1$ tels que :

  - les composantes de $y_1$ sont les $P$ composantes d'un voisinage réduit de taille $n_h \times n_w$ d'un des $HW/(hw)$ motifs de base appliqué à l'image de référence $I_i$,
  - les composantes de $x_1$ sont les composantes d'un voisinage réduit de taille $n_h \times n_w$ de l'un des $HW/(hw)$ motifs de base appliqué à l'image rendue $J_i$, avec $n_h > h$ et $n_w > w$ ;

- une deuxième étape de reconstruction d'une image couleur réalisant le produit de la matrice de démosaïçage $D$ avec une représentation matricielle d'une image mosaïque provenant du capteur après acquisition de l'image couleur par ledit capteur, ledit produit de la matrice de démosaïçage $D$ avec la représentation matricielle de l'image mosaïque mettant en œuvre une interpolation de la couleur de chaque pixel de l'image mosaïque en fonction d'un voisinage, de taille $n_h \times n_w$ pixels, d'un motif de base de taille $h \times w$, correspondant au motif de base de la mosaïque de filtres.

Avantageusement la taille du voisinage peut être définie par $n_h n_w = Phw$.

Une première matrice de démosaïçage $D_1$ peut s'exprimer comme une espérance mathématique $E$ calculée sur les $N$ images de référence de la première base de données : $D_1 = E^{i=1..N}\{yx_1^T(x_1x_1^T)^{-1}\}$, avec $y$ une matrice de $HW/(hw)$ vecteurs de taille $Phw$ représentant l'image couleur.

La première matrice de démosaïçage $D_1$ peut s'exprimer ainsi : $D_1 = S_1RM_1^T(M_1RM_1^T)^{-1}$ avec $x_1 = M_1y_1$, $M_1$ étant une matrice de projection de $y_1$ sur $x_1$, $y = S_1y_1$, $S_1$ étant une matrice de réduction du voisinage du vecteur $y_1$ et de transformation du vecteur $y_1$ en $y$, et $R = \frac{1}{NPHW}E^{i=1..N}\{y_1y_1^T\}$ étant une matrice de corrélation des images résolues de la première base de données exprimées en fonction des voisinages réduits de taille $n_h \times n_w$.

La matrice de démosaïçage peut s'exprimer en fonction de la sensibilité spectrale du capteur et des fonctions spectrales des $P$ filtres de couleurs différentes.

La première base de données pouvant alternativement comprendre des images multi-spectrales de réflectance, une deuxième matrice de démosaïçage $D_2$ peut être définie par l'expression :

$$D_2 = F^TCLS_1R'L_1^TC_1^TF_1M_1^T(M_1F_1^TC_1L_1R'L_1^TC_1^TF_1M_1^T)^{-1},$$

avec

$$R' = \frac{1}{NHWP_\lambda} E^{i=1..N}\{z_1 z_1^T\},$$

La deuxième matrice de démosaïçage $D_2$ peut être construite selon les étapes suivantes :

- calcul d'une matrice de vecteurs $y_0$ représentant une image à $P$ composantes en fonction d'une matrice de vecteurs $z_0$ représentant une image multi-spectrale de réflectance obtenue à partir d'une réflexion d'un objet éclairé par une source de lumière de densité spectrale de puissance $L(\lambda)$, $\lambda$ étant une composante spectrale, tel que : $y_0 = F_0^T C_0 L_0 z_0$, avec $F_0$ une matrice de taille $P_\lambda \times P$ de fonctions de transmission spectrale des filtres de la mosaïque, avec $C_0$ une matrice diagonale de taille $P_\lambda \times P_\lambda$ d'une sensibilité spectrale du capteur, $L_0$ une matrice diagonale de taille $P_\lambda \times P_\lambda$ des densités spectrales de puissance de la source de lumière ;
- construction de la matrice de vecteurs $y$ à partir de l'image multi-composantes et d'une matrice de vecteurs $z$, construite à partir de l'image multi-spectrale de réflectance, lesdites matrices de vecteurs $y$ et $z$ comprenant ledit motif de base, tels que $y = F^T CLz$ avec $F = I_{hw} \otimes F_0$, $I_{hw}$ étant une matrice identité de dimensions $hw \times hw$, $C = I_{hw} \otimes C_0$, et $L = I_{hw} \otimes L_0$ ;
- construction d'une matrice de vecteurs $z_1$ composée des voisinages réduits de taille $n_h \times n_w$ du motif de base de l'image de multi-spectrale de réflectance telle que $y_1 = F_1^T C_1 L_1 z_1$, $y_1$ étant une matrice composée des voisinages réduits de taille $n_h \times n_w$ du motif de base de taille $h \times w$ de l'image spectrale multi-spectrale de réflectance, avec $F_1 = I_{n_h n_w} \otimes F_0$, $I_{n_h n_w}$ étant une matrice identité de dimensions $n_h n_w \times n_h n_w$, $L_1 = I_{n_h n_w} \otimes L_0$, et $C_1 = I_{n_h n_w} \otimes C_0$ ;
- construction de la deuxième matrice de démosaïçage $D_2$ avec $M_1$ étant une matrice de projection de $y_1$ sur $x_1$ et $S_1$ étant une matrice de réduction du voisinage du vecteur $y_1$ et de transformation en $y$.

$C_0$ peut également être un produit des sensibilités spectrales de composants du chemin optique de la caméra par la sensibilité spectrale du capteur, lesdits composants pouvant comprendre au moins l'un parmi : un objectif de la caméra, un filtre infrarouge, un filtre spatial passe-bas, un système de micros-lentilles.

Chaque ligne de la matrice de démosaïçage $D$, $D_1$, $D_2$ peut s'exprimer comme un filtre de convolution.

L'invention concerne également un système de traitement de données comprenant des moyens de mise en œuvre des étapes du procédé de reconstruction d'une image couleur.

L'invention concerne également un produit programme d'ordinateur comprenant des instructions qui lorsque le programme est exécuté par un ordinateur, conduisent l'ordinateur à mettre en œuvre les étapes du procédé de reconstruction d'une image couleur.

Un autre aspect de l'invention est qu'elle peut s'appliquer à un procédé d'optimisation de fonctions spectrales de filtres et d'arrangement des filtres sur une mosaïque de $P$ filtres de couleurs différentes, répétés de manière à remplir un motif de base de taille $h \times w$, ledit motif de base se répétant de façon à couvrir la mosaïque de filtres, ladite mosaïque de filtres étant appliquée sur un capteur photosensible. Ledit procédé comprend une optimisation multicritères par minimisation d'une erreur de restitution colorimétrique et par minimisation d'une erreur quadratique moyenne entre une image provenant d'un capteur idéal, acquise à partir d'une image d'une base de données d'images de référence, et une image provenant d'un capteur recouvert de la mosaïque de $P$ filtres différents, acquise à partir de la même image de la base de données d'images de référence, ladite image acquise par le capteur recouvert de la mosaïque de filtres étant reconstruite par le procédé de reconstruction d'une image couleur.

Le procédé d'optimisation comprend en outre une minimisation d'une erreur de restitution colorimétrique entre l'image provenant du capteur idéal acquise à partir de l'image de la base de données d'images, et une image provenant d'un capteur recouvert d'une série de $P$ filtres, chacun des $P$ filtres recouvrant la totalité du capteur, ladite image étant acquise à partir de la même image de la base de donnée.

Le procédé d'optimisation comprend en outre une minimisation d'une erreur de restitution colorimétrique entre une mire de MacBeth acquise par un capteur parfait et une mire de MacBeth acquise par un capteur muni de la mosaïque des $P$ filtres.

L'invention concerne également un système de traitement de données comprenant des moyens de mise en œuvre des étapes du procédé d'optimisation.

L'invention concerne en outre un produit programme d'ordinateur comprenant des instructions qui lorsque le programme est exécuté par un ordinateur, conduisent l'ordinateur à mettre en œuvre les étapes du procédé d'optimisation.

Avantageusement, l'invention permet d'améliorer la vitesse d'exécution de l'algorithme de démosaïçage ainsi que l'encombrement de la mémoire d'un calculateur utilisé dans le cadre de la mise en œuvre de l'invention.

**Description des figures**

D'autres avantages et caractéristiques de l'invention apparaîtront à l'examen de la description détaillée de plusieurs modes de réalisation nullement limitatifs, et des dessins annexés, sur lesquels :

- La figure la représente un principe général d'acquisition d'une image par un capteur muni d'une mosaïque de filtres ;
- La figure 1b représente un exemple d'un motif de base pour une mosaïque de filtres ;
- La figure 2a représente une conversion d'une image issue d'un capteur muni d'une mosaïque de filtres, en une matrice de vecteurs ;
- La figure 2b représente une conversion d'une image à plusieurs composantes en une matrice de vecteurs ;
- La figure 2c représente un exemple de matrice de calcul d'une image en sortie d'un capteur muni d'une mosaïque de filtres de Bayer ;
- La figure 2d représente un exemple d'interpolation d'une couleur d'un pixel en utilisant un voisinage glissant selon l'état de la technique ;
- La figure 3 représente un exemple d'interpolation d'une couleur d'un pixel en utilisant un voisinage selon l'invention ;
- La figure 4a représente une conversion d'une image mosaïque en sortie d'un capteur, en une matrice de vecteurs ;
- La figure 4b représente une conversion d'une image multi-composantes en une matrice de vecteurs ;
- La figure 5 représente un exemple d'acquisition de données pour le calcul d'une matrice de démosaïçage sur un domaine spectral continu ;
- La figure 6a représente des conversions d'une image multi-spectrale en plusieurs matrices de vecteurs différentes ;
- La figure 6b représente un calcul d'une matrice de vecteurs représentant une image rendue après acquisition d'une image multi-spectrale par un capteur associé à un filtre ;
- La figure 7 représente un principe de transformation d'une matrice de démosaïçage en filtres de convolution ;
- La figure 8 représente un exemple d'acquisition de données pour une optimisation des dispositions et des fonctions spectrales des filtres d'une mosaïque de filtres ;
- La figure 9 représente des calculs de différentes images utilisées pour optimiser les dispositions et les fonctions spectrales des filtres de la mosaïque de filtres ;
- La figure 10 représente le procédé et dispositif de démosaïçage selon l'invention ;
- La figure 11 représente le procédé de construction d'une matrice de démosaïçage selon l'invention.

**Description détaillée**

La présente invention traite notamment de l'acquisition d'une image multi-chromatique ou multi-composantes couleur de taille $H \times W$. Sur la figure 1a, l'image comprend $P$ composantes de couleurs. L'image à $P$ composantes de couleur 1 est acquise par un premier capteur photosensible 2 après passage de la lumière provenant d'un objet au travers d'une première mosaïque de filtres 3, ou matrice, composée de filtres 7 de $P$ couleurs différentes. Ladite mosaïque de filtres 3 est de taille $H \times W$. Le premier capteur 2 est défini par une matrice de pixels 4 de taille $H \times W$. Chaque filtre 7 est de la taille d'un pixel 4 du premier capteur 2 et recouvre un pixel 4 du premier capteur 2. La mosaïque 3 de filtres de couleurs 7 est composée à partir du premier motif de base 6 de taille $h \times w$ avec $hw \geq P$. Le premier motif de base 6 comprend $h \times w$ couleurs différentes ou non. Par exemple sur la figure 1b, le premier motif de base 6 comprend deux filtres rouge F1, deux filtres orange F2, deux filtres vert F3, un filtre rose F4, un filtre bleu F5 et un filtre jaune F6. Les filtres F1, F2, F3, F4, F5, F6 du premier motif de base 6 sont disposés selon un agencement particulier. Dans l'exemple représenté sur la figure 1b, le premier motif de base 6 se présente sous la forme d'une matrice de $3 \times 3$ de filtres disposés de la façon suivante, de gauche à droite et de haut en bas : F3, F1, F2, F4, F5, F3, F1, F6, F2. Dans la matrice ou mosaïque 3 de filtres couleurs, le premier motif de base 6 se répète de manière à couvrir l'ensemble de la mosaïque 3 sans recouvrement entre les différents motifs de base 6. La taille du premier motif de base 6 est définie de manière à ce que $H$ soit un multiple de $h$ et $W$ un multiple de $w$. D'autres motifs de base peuvent être utilisés sans pour cela sortir du cadre de l'invention.

Une fois l'image acquise par le premier capteur 2, celle-ci est traitée afin de reconstruire l'image multi-composante. Le traitement réalisé sur l'image brute sortant du premier capteur 2, est un procédé de démosaïçage utilisant une matrice de démosaïçage $D_1$. La matrice de démosaïçage $D_1$ est obtenue par la méthode des moindres carrées appliquée aux matrices de vecteurs $x_1$, $y$ :

$$D_1 = E^{i=1..N}\{yx_1^T(x_1x_1^T)^{-1}\} \quad (1003)$$

Dans l'expression (1003), $y$ est une matrice de vecteurs telle que représentée sur la figure 2b. La matrice de vecteurs $y$ est obtenue à partir d'une image résolue $I_i$ à $P$ composantes de couleurs faisant partie d'une base de données d'images de référence utilisée pour la construction de la matrice $D_1$ par apprentissage tel que décrit dans l'état de la technique. L'image résolue $I_i$ est de dimensions $H \times W$ et comprend un troisième motif de base 21 de taille $h \times w$. La matrice de vecteurs $y$ est construite en prenant les $P$ composantes d'un troisième motif de base 21, c'est-à-dire les $P$ composantes de chaque pixel du troisième motif de base 21. Chaque vecteur de $y$ est donc de taille $Phw$ et $y$ comprend $HW/(hw)$ vecteurs de taille $Phw$ pour représenter toutes les informations contenues dans une image $I$ multi-composantes provenant de la base de données d'images de référence.

Dans l'ensemble de la description on utilise indifféremment $H \times W$ pour la taille d'une matrice ou d'une image. Dans le cas d'une matrice, $H \times W$ représente le nombre de lignes $H$ par le nombre de colonnes $W$ de la matrice. Dans le cas d'une image, $H \times W$ représente la dimension de l'image correspondant à une matrice de taille $H \times W$. De la même manière, la taille du premier motif de base 6 est de $h$ lignes par $w$ colonnes. Dans une image, par extension, on définit une portion de l'image dont la taille correspond à la taille du premier motif de base 6 dans une matrice de même taille que l'image. On peut ainsi dire que le motif de base 6 est appliqué sur l'image. Par analogie, la portion d'image correspondant au motif de base, tel que le troisième motif de base 21 représenté sur la figure 2b, sera aussi nommée motif de base. La taille du motif de base de l'image est de la même dimension que le motif de base de la matrice. Par extension, on définit la taille du motif de base de l'image comme étant $h \times w$.

Dans l'expression (1003), $x_1$ est construit tel que représenté sur la figure 4a. À partir de la base de données d'images de référence, une simulation permet d'obtenir une nouvelle base de données d'images brutes 40 contenant des données issues du premier capteur 2, simulées après acquisition des images de la base de données d'images de référence par le premier capteur 2. Les données issues du premier capteur 2 forment une image brute 40 de taille $H \times W$ qui peut être décomposée en pixels 41, chaque pixel 41 correspondant à une réponse d'un photosite du premier capteur 2 par exemple, telle que représentée sur la figure 4a. L'image brute 40 peut être représentée comme une matrice de taille $H \times W$ comprenant le premier motif de base 6 correspondant au motif de base de la mosaïque 3 de filtres 7 telle que représentée sur la figure 1a. Sur l'exemple représenté sur la figure 4a, chaque pixel correspond à l'une des $P$ composantes couleurs et donc à l'un des $P$ filtres 7. Sur la figure 4a, les composantes du premier motif de base 6 sont notées $F_1$ à $F_p$. Le premier motif de base 6 de l'image mosaïque 40 est donc de taille $h \times w$. Sur la figure 4a, le motif de base est pour l'exemple de taille $3 \times 3$. Selon l'invention, un quatrième voisinage de pixels 30 est défini par rapport au premier motif de base 6. Le quatrième voisinage 30 est de taille $n_h \times n_w$. Le quatrième voisinage 30 selon l'invention est par la suite nommé voisinage réduit 30. La taille du voisinage réduit 30 est définie selon l'invention telle que $n_h > h$ et $n_w > w$. On peut par exemple utiliser un voisinage réduit tel que $n_h n_w = Phw$. Avantageusement le voisinage réduit ainsi défini comprend une quantité et une qualité d'informations de couleurs optimales pour décrire l'image couleur captée 1.

La figure 3 représente une utilisation du voisinage réduit 30 selon l'invention pour réaliser les calculs d'interpolation des couleurs de chaque pixel de l'image mosaïque 40. Pour l'exemple, le motif de base utilisé est le quatrième motif de base 25 tel que représenté sur la figure 2d selon l'état de la technique. On définit ainsi un voisinage réduit 30 de taille $4 \times 4$ sur l'exemple représenté figure 3 autour du quatrième motif de base 25. Le voisinage réduit 30 a par exemple une taille d'un pixel en largeur et en longueur de plus que le quatrième motif de base 25. La couleur de chaque pixel du quatrième motif de base 25 est calculée en interpolant les couleurs des pixels du voisinage réduit 30. Lorsque l'on passe d'un quatrième motif de base 25 à un quatrième motif de base 25 voisin sur l'image mosaïque 40, le voisinage réduit 30 est translaté sur l'image mosaïque 40 d'un nombre de pixels équivalent à la taille d'un côté du quatrième motif de base 25 soit dans l'exemple présent : deux pixels. Le voisinage 30 est dit réduit en ce qu'un seul et même voisinage est utilisé pour tous les pixels d'un même motif de base : ce même voisinage peut être défini comme le voisinage du motif de base.

De manière générale, le voisinage réduit 30 est défini tel que $n_h > h$ et $n_w > w$. Par exemple, on peut prendre $n_h n_w = Phw$.

Le même voisinage réduit 30 de taille $n_h \times n_w$ selon l'invention est donc utilisé pour interpoler la couleur de chaque pixel du premier motif de base 6 lors de la reconstruction de l'image couleur captée 1 selon l'invention. Ainsi, pour construire la matrice de démosaïçage on construit la matrice de vecteurs $x_1$ tel que chaque vecteur comprend uniquement les composantes des voisinages réduits 30 de chaque premier motif de base 6 composant l'image mosaïque 40. Chaque vecteur de $x_1$ est donc de taille $n_h n_w$ et la matrice $x_1$ comprend $HW/(hw)$ vecteurs de taille $n_h n_w$. Ainsi la matrice de démosaïçage $D_1$ de l'expression (1003) est de taille $Phw \times n_h n_w$. Avantageusement, une telle matrice est de taille inférieure à une matrice selon l'état de la technique tout en conservant une bonne qualité dans la reconstruction d'une image couleur. Par exemple on peut montrer expérimentalement que l'image reconstruite avec un voisinage glissant de taille $n_h \times n_w$ possède les mêmes performances qu'un voisinage réduit de taille $(n_h + h - 1) \times (n_w + w - 1)$. D'un point de vue théorique les deux voisinages couvrent le même domaine de l'image mosaïque. Par exemple, pour un motif de base de Bayer de taille $2 \times 2$ et un voisinage glissant de taille $3 \times 3$ on obtient les mêmes résultats en terme de performances qu'avec un voisinage réduit de taille $4 \times 4$.

Il est également possible de définir une matrice de vecteurs $y_1$, telle que représentée sur la figure 4b. La matrice de vecteurs $y_1$ représente l'image résolue à $P$ composantes 42 sous la forme d'une matrice de $HW/(hw)$ vecteurs de taille $Pn_hn_w$ construite comme la matrice $y$ mais en prenant le voisinage réduit 30 du premier motif de base 6 à la place du premier motif de base 6 pour chacune des $P$ composantes de l'image résolue 42. Ainsi en définissant les opérateurs suivants, il est possible d'obtenir une version simplifiée de la matrice de démosaïçage $D_1$.

On définit une matrice $M_1$ de projection de la matrice de vecteurs $y_1$ de l'image résolue à $P$ composantes munie de son voisinage réduit 30 sur la matrice de vecteurs $x_1$ de l'image mosaïque 40 munie de son voisinage réduit 30, telle que :

$$x_1 = M_1 y_1 \qquad (1004)$$

On définit une matrice $S_1$ de réduction du voisinage réduit 30 de la matrice de vecteurs $y_1$ pour la transformer en la matrice de vecteurs $y$, telle que :

$$y = S_1 y_1 \qquad (1005)$$

Il est ainsi possible de définir la matrice de démosaïçage $D_1$ comme suit :

$$D_1 = S_1 R M_1^T (M_1 R M_1^T)^{-1} \qquad (1006)$$

avec R la matrice de corrélation telle que :

$$R = \frac{1}{NPHW} E^{i=1..N}\{y_1 y_1^T\} \qquad (1007)$$

Avantageusement, en utilisant la formulation de $D_1$ selon l'expression (1006) il est possible de calculer une seule fois la matrice de corrélation $R$ des images couleurs de la base de données d'images de référence, ou images résolues, lesdites images résolues étant munies de leur voisinage réduit 30 de taille $n_h \times n_w$. Ainsi il est possible de recalculer simplement la matrice de démosaïçage $D_1$ en modifiant les opérateurs $M_1$ et $S_1$ selon la mosaïque de filtres considérée.

Une estimation de l'erreur liée au procédé de démosaïçage peut s'exprimer ainsi :

$$e = E^{i=1..N}\{tr\big((\tilde{y}-y)(\tilde{y}-y)^T\big)\} \qquad (1008)$$

donc

$$e = tr\{D_1 M_1 R M_1^T D_1^T + S_1 R S_1^T - S_1 R M_1^T D_1^T - D_1 M_1 R S_1^T\} \qquad (1009)$$

avec $tr$, l'opérateur trace.

Il est ainsi possible d'évaluer à priori une performance d'une mosaïque de filtres particulière pour encoder une base de données d'images de référence.

La base de données d'images de références permet de calculer $R$ pour une taille de voisinage réduit $n_h \times n_w$ donnée.

La définition du premier motif de base 6 de la mosaïque de filtres permet de calculer $M_1$, $S_1$, et $D_1$.

À partir de ces données, l'erreur moyenne dans la reconstruction d'une image, liée à l'utilisation d'une mosaïque particulière positionnée sur le premier capteur 2, peut être calculée directement sur la base de données d'images de référence.

De la même manière, il est possible de calculer une moyenne d'un écart de couleurs entre les images de références et les images résolues de la manière décrite ci-après.

Une matrice contenant l'efficacité quantique spectrale des filtres est nommée $F_{QE}$. L'efficacité quantique spectrale peut être mesurée par un monochromateur, ou estimée par une transformation adéquate si l'on ne connait pas à priori les fonctions de transmission spectrales des filtres. La mesure de l'efficacité quantique spectrale est réalisée en procédant à un enregistrement des données acquises par le premier capteur 2 à partir des images correspondant aux lumières quasi-chromatiques produites par le monochromateur pour chaque pixel du motif de base. Les niveaux des images sont ensuite arrangés de sorte à ce que les niveaux de sensibilités liés aux temps d'expositions lors de la mesure se correspondent, c'est-à-dire que l'on multiplie les niveaux des images par un facteur dépendant du temps d'exposition pour harmoniser les sensibilités dans une unité radiométrique donnée. Pour calculer une efficacité quantique des $P$ différents pixels couverts par les $P$ filtres différents sur un domaine de longueur d'onde donné avec un pas de longueur d'onde donné, on utilise un appareil de mesure de la transparence des filtres, ou de l'ensemble du chemin optique, sur $N_\lambda$ intervalles de longueur d'onde. Par exemple pour un domaine de 380nm à 780nm avec un pas de 1nm, on obtient $N_\lambda = 401$.

Une transformée de l'espace des filtres vers l'espace de couleur trichromatique normalisé CIE 1931 - XYZ peut être définie de la façon suivante :

$$FtoXYZ = XYZ^T F_{QE}(F_{QE}^T F_{QE})^{-1} \qquad (1010)$$

avec $F_{QE}$ de taille $N_\lambda \times P$, $XYZ$ une matrice de taille $N_\lambda \times 3$ contenant les fonctions spectrales des filtres définies pour l'espace couleur CIE 1931 - XYZ, et $FtoXYZ$ de taille $3 \times P$. $FtoXYZ$ est une matrice de transformation permettant de convertir une image couleur à $P$ composantes en une image dont les coordonnées colorimétriques sont exprimées dans l'espace de couleurs CIE 1931 - XYZ. L'espace de couleurs CIE 1931 - XYZ a été défini par la commission internationale de l'éclairage (CIE) en 1931. En étendant la taille de la matrice de transformation $FtoXYZ$ à la taille du vecteur $y$, on obtient la transformation $y_{XYZ}$ définie par :

$$y_{XYZ} = (I_{hw} \otimes FtoXYZ)y \qquad (1011)$$

dans laquelle $I_{hw}$ est une matrice identité de taille $hw \times hw$ et $\otimes$ représente un produit de Kronecker.

Une approximation de la moyenne de l'écart de couleur au carré $E^{i=1..N}\{\Delta E^2\}$ sur la base de données d'images de référence pour une mosaïque de filtres donnée et une taille de voisinage définie, est donnée par :

$$E^{i=1..N}\{\Delta E\} = \sqrt{\overline{\Delta E^2}} \qquad (1012)$$

avec :

$$\overline{\Delta E^2} = tr(K(\tilde{y} - y)(\tilde{y} - y)^T K^T$$
$$= tr\{KD_1 M_1 RM_1^T D_1^T K^T + KSRS^T K^T - KSRM_1^T D_1^T K^T - KD_1 M_1 RS^T K^T\}$$
$$(1013),$$

$$K = I_{hw} \otimes J' \qquad (1014),$$

$$J' = \left( \frac{1}{3}\begin{bmatrix} 0 & 116 & 0 \\ 500 & -500 & 0 \\ 0 & 200 & -200 \end{bmatrix} FtoXYZ \right) \qquad (1015)$$

$J'$ étant une approximation de la transformée vers l'espace de couleur CIE L*a*b*.

Une représentation dans l'espace couleur CIE 1931 - XYZ est une représentation linéaire du système visuel. Or cette représentation n'est pas satisfaisante pour prédire les différences de couleurs. Pour cela on utilise donc l'espace couleur CIE L*a*b* qui uniformise l'espace couleur pour s'approcher de la perception humaine. L'espace de couleur CIE L*a*b* a été défini par la commission internationale de l'éclairage (CIE) en 1976.

Il est ainsi possible de tester et d'évaluer à moindre coût de calcul différentes mosaïques notamment du fait que le calcul de $R$ est réalisé une seule fois avec le voisinage réduit 30 pour chaque image de la première base de données de référence, quelle que soit la mosaïque testée. Il est ainsi possible de calculer une erreur moyenne dans la reconstruction des images de la base de données de référence avec une mosaïque donnée.

Avantageusement, il est possible de transformer une image reconstruite par le procédé démosaïçage selon l'invention vers tout espace normalisé dérivé de l'espace de couleurs CIE 1931 - XYZ. On peut choisir par exemple un espace sRGB (signifiant standard Red Green Blue) qui est un espace colorimètrique trichromatique défini par la norme défini par la norme CIE 61966-2-1 (1999). Par exemple, une transformation vers l'espace couleur sRGB peut être réalisée de la manière suivante :

$$y_{sRGB} = A(I_{hw} \otimes FtoXYZ)\tilde{y} \quad (1016)$$

En utilisant l'expression (1002) appliquée à $D_1$ et $x_1$, on obtient :

$$y_{sRGB} = A(I_{hw} \otimes FtoXYZ)D_1 x_1 \quad (1017)$$

avec

$$A = I_{hw} \otimes \begin{bmatrix} 3.2406 & -1.5372 & -0.4986 \\ -0.9689 & 1.8758 & 0.0415 \\ 0.0557 & -0.2040 & 1.0570 \end{bmatrix} (1018)$$

$A$ étant une matrice de transformation de l'espace de couleurs CIE 1931 - XYZ vers l'espace couleur sRGB.

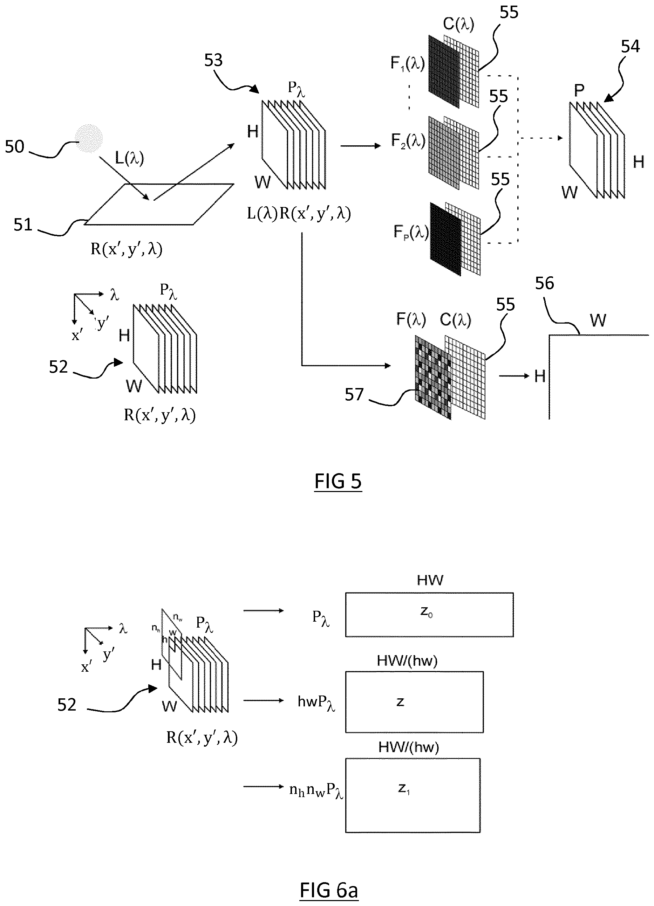

La figure 5 représente une généralisation du calcul de la matrice de démosaïçage selon l'invention au domaine spectral tout entier, c'est-à-dire à un domaine spectral continu. La figure 5 représente une source de lumière 50 de densité spectrale de puissance $L(\lambda)$ définie en fonction des différentes composantes spectrales $\lambda$, c'est-à-dire de la valeur de l'énergie entre deux longueurs d'ondes données. La source de lumière 50 est réfléchie par une surface d'un objet 51 représenté par une image multi-spectrale de réflectance $R(x',y',\lambda)$ 52. La réflectance représente une modulation du spectre de la source de lumière 50 par l'objet 51 sur lequel elle se réfléchie. L'image multi-spectrale de réflectance 52 est composée de $P_\lambda$ images de taille $H \times W$ définies dans un repère orthogonal $(x',y',\lambda)$. La réflexion de la lumière 50 sur l'objet ou surface réfléchissante 51 donne une image de radiance $L(\lambda)R(x',y',\lambda)$.

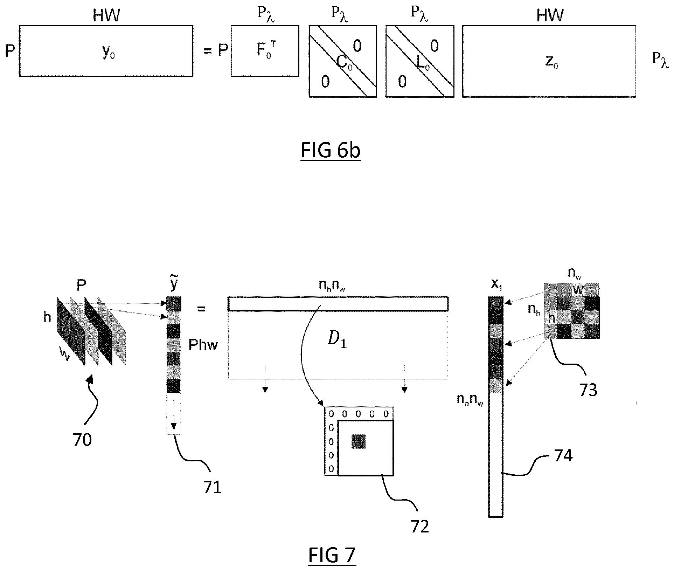

Il est possible d'exprimer une image multi-composantes 54 à partir de l'image multi-spectrale de réflectance, en multipliant l'image multi-spectrale de réflectance 52 par la densité spectrale de puissance $L(\lambda)$, pour déterminer une image de radiance 53. Ensuite une matrice représentant l'image de radiance 53 est multipliée par les fonctions de transmission des filtres $F_1(\lambda)$, $F_2(\lambda)$, ..., $F_P(\lambda)$ en fonction de la composante spectrale de la lumière et de $C(\lambda)$. Cette opération peut être réalisée sous forme vectorielle comme représenté sur les figures 6a et 6b. $C(\lambda)$ est défini comme la sensibilité spectrale du chemin optique de la caméra sans la sensibilité spectrale de la mosaïque de filtres. La caméra peut comprendre sur son chemin optique un objectif, un filtre infrarouge, un filtre spatial passe bas, un système de micros lentilles, et un troisième capteur 55. $C(\lambda)$ peut alors être défini comme le produit des fonctions de transmission spectrale de chaque composant du chemin optique sans les fonctions de transmission des filtres de la mosaïque. Si on considère uniquement le capteur sur le chemin optique de la caméra, alors $C(\lambda)$ est la sensibilité du troisième capteur 55. Alternativement, on peut également considérer sur le chemin optique un ou plusieurs composants, en plus du capteur parmi : un objectif, un filtre infrarouge, un filtre spatial passe bas, un système de micros lentilles.

L'opération que l'on modélise à travers la détermination de la matrice de démosaïçage est la reconstruction d'une image multi-composantes à partir d'une image mosaïque 56 produite par un troisième capteur 55 sur lequel est positionnée une deuxième mosaïque de filtres 57 de fonction spectrale $F(\lambda)$, après acquisition de l'image de radiance 53. La deuxième mosaïque de filtres 57 est composée de $P$ filtres définis pour $P_\lambda$ intervalles de valeurs dans le domaine spectral. En général, on considère pour un domaine spectral de 400nm à 700nm un pas de 10nm. Le troisième capteur 55 est semblable au premier capteur 2 représenté sur la figure 1a et la deuxième mosaïque de filtres 57 est semblable à la première mosaïque de filtres 3 représentée sur la figure 1a.

La figure 6a représente plusieurs transformations vectorielles de l'image multi-spectrale de réflectance 52, ou plusieurs façons de déplier ladite image multi-spectrale de réflectance 52.

On peut construire une première matrice de vecteurs $z_0$ dont les vecteurs sont des composantes spectrales de l'image multi-spectrale de réflectance 52, de taille $P_\lambda$. La première matrice de vecteurs $z_0$ est composée de $HW$ vecteurs différents.

Une deuxième matrice de vecteurs $z$ représentant l'image de réflectance multi-spectrale 52 peut également être construite. Pour construire la deuxième matrice de vecteurs $z$, on regroupe les pixels par groupes de taille $hw$, chaque groupe correspondant aux positions des motifs de base 6 sur la deuxième mosaïque de filtres 57 pour l'ensemble des composantes spectrales $P_\lambda$. Ainsi, la deuxième matrice de vecteurs $z$ est composée de $HW/(hw)$ vecteurs de taille $hwP_\lambda$.

Une troisième matrice de vecteurs $z_1$ peut être construite à partir de l'image multi-spectrale de réflectance 52 en utilisant un voisinage de taille $n_h \times n_w$ autour de chacun des motifs de base 6 sur la deuxième mosaïque de filtres 57. Le vecteur cumulé des composantes spectrales de chacun des pixels du voisinage est de dimension $n_h n_w P_\lambda$. La troisième matrice $z_1$ est alors composée de $HW/(hw)$ vecteurs différents.

La figure 6b représente un calcul d'une matrice de vecteurs multi-composantes $y_0$ à partir de la première matrice de vecteurs $z_0$. La première matrice de vecteurs $z_0$ représentant l'image multi-spectrale de réflectance 52 est dans un premier temps multipliée par une matrice diagonale $L_0$ de dimensions $P_\lambda \times P_\lambda$ dont les composantes sont les $P_\lambda$ valeurs de la densité spectrale $L(\lambda)$ de la source de lumière, les autres valeurs de la matrice $L_0$ étant mises à zéro. Puis dans un deuxième temps, le résultat est multiplié par une matrice diagonale $C_0$ de dimensions $P_\lambda \times P_\lambda$. La matrice diagonale $C_0$ comprend sur sa diagonale les composantes de la sensibilité spectrale $C(\lambda)$ du chemin optique de la caméra sans la fonction de transmission spectrale de la mosaïque de filtres 57. Le résultat est ensuite multiplié par une transposée d'une matrice $F_0$ de $P_\lambda$ fonctions de transmission spectrale des $P$ filtres $F_1(\lambda)$, $F_2(\lambda)$, ..., $F_P(\lambda)$ de la mosaïque de filtres, ladite matrice $F_0$ étant de taille $P_\lambda \times P$. Le résultat est donc une matrice de vecteurs multi-composantes $y_0$ de taille $P \times HW$ telle que :

$$y_0 = F_0^T C_0 L_0 z_0 \qquad (1019)$$

De la même manière que l'on construit la matrice de vecteurs $y$ à partir de l'image résolue multi-composantes $I_i$, tel que représenté sur la figure 2b, c'est-à-dire en incorporant le premier motif de base 6, tel que représenté sur la figure 4b, dans les vecteurs ligne de ladite matrice, il est possible de construire la deuxième matrice de vecteurs $z$ à partir de l'image multi-spectrale de réflectance 52 en incluant le premier motif de base 6 dans le vecteur ligne. Dans ce cas, $z$ est de dimensions $P_\lambda hw \times HW(hw)$. Il est alors possible de transposer l'expression (1019) pour exprimer $y$ en fonction de $z$ :

$$y = F^T C L z \qquad (1020)$$

avec les expressions suivantes : $F = I_{hw} \otimes F_0$, $C = I_{hw} \otimes C_0$, et $L = \otimes I_{hw} L_0$ dans lesquelles $I_{hw}$ est une matrice identité de taille $hw \times hw$.

La nouvelle matrice de démosaïçage $D_2$ appliquée à une image multi-spectrale peut alors s'écrire ainsi :

$$D_2 = F^T C L S_1 R' L_1^T C_1^T F_1 M_1^T (M_1 F_1^T C_1 L_1 R' L_1^T C_1^T F_1 M_1^T)^{-1} \qquad (1021)$$

telle que :

$$R' = \frac{1}{NHWP_\lambda} E^{i=1..N}\{z_1 z_1^T\} \qquad (1022)$$

avec

$$y_1 = F_1^T C_1 L_1 z_1 \qquad (1023)$$

$$F_1 = I_{n_h n_w} \otimes F_0 \qquad (1024)$$

$$L_1 = I_{n_h n_w} \otimes L_0 \qquad (1025)$$

$$C_1 = I_{n_h n_w} \otimes C_0 \qquad (1026)$$

et $x_1 = M_1 y_1 = M_1 F_1 C_1 L_1 z_1$ et $y = S_1 y_1$

La nouvelle matrice de démosaïçage $D_2$ ainsi définie permet de tenir compte, en plus d'un arrangement quelconque des couleurs dans la mosaïque de filtres, caractérisé par $M_1$, des fonctions de transmission des filtres $F_0$ et de la densité spectrale de la source de lumière $L_0$. Avantageusement, la formulation de $D_2$ prend en compte la définition du voisinage réduit selon l'invention.

Il est également possible de calculer à priori la performance d'une mosaïque de filtres particulière, définie par l'arrangement spatial de ses filtres, les fonctions spectrales de transmission de ses filtres et la source de lumière utilisée. À cette fin, il est possible d'adapter au domaine multi-spectral les équations de calcul de l'erreur d'estimation liée au démosaïçage (1008), (1009) et les équations de calcul de l'écart de couleur (1012), (1013), (1014), (1015) lié au démosaïçage.

L'efficacité quantique spectrale $F_{QE}$ des filtres est équivalente au produit de la matrice de transmission des filtres $F$ avec $C$, $C$ étant la sensibilité du capteur multipliée par les fonction de transmission spectrale des composants du chemin optique de la caméra sans la mosaïque de filtres. Par simplification, il est possible de considérer uniquement la sensibilité du capteur pour calculer $C$.

Avantageusement, dans l'équation (1021), la multiplication à gauche par l'expression $F^T CLS_1$ projette l'image reconstruite selon les $P$ composantes de couleurs. Autrement dit, $F^T CLS_1$ projette les $P_\lambda$ composantes du domaine spectrale sur les P couleurs des filtres de la mosaïque.

Si l'on ne réalise pas la projection de l'image reconstruite selon les $P$ composantes de couleurs alors on obtient un filtre de reconstruction des images multi-spectrales. Il est ainsi possible d'estimer un spectre de couleurs pour chaque pixel de l'image reconstruite à partir de l'image mosaïque.

La figure 7 représente une transformation d'une matrice de démosaïçage, par exemple $D_1$ en un filtre de convolution.

Une matrice de démosaïçage, telle la matrice $D_1$, permet de reconstruire la matrice de vecteurs $\tilde{y}$ représentant l'image reconstruite à partir de la matrice de vecteurs $x_1$ représentant l'image mosaïque : $\tilde{y} = D_1 x_1$.

Chaque ligne de la matrice de démosaïçage peut être considérée comme un filtre de convolution qui permet de reconstruire une des couleurs de l'un des pixels d'un cinquième motif de base 70, de taille $h \times w$ de l'image couleur, à $P$ composantes. Le cinquième motif de base 70 est codé comme un premier vecteur colonne 71 de taille $Phw$, à partir d'un voisinage réduit 73, de taille $n_h \times n_w$, du motif de base $hw$ comprenant ledit pixel correspondant dans l'image mosaïque. Le voisinage réduit 73 est codé comme un deuxième vecteur colonne 74.

Chaque ligne de la matrice de démosaïçage $D_1$ peut être convertie en un filtre de convolution équivalent 72 qui s'applique sur chaque pixel de l'image mosaïque pour reconstruire les pixels de l'image couleur à $P$ composantes. Avantageusement, l'expression d'une matrice de démosaïçage en un ensemble de filtres de convolution, chacun applicable à un pixel de l'image mosaïque, permet d'éviter la conversion de l'image mosaïque en une matrice de vecteurs, qui représente une opération coûteuse en temps de calcul, en ressource de calcul et en mémoire. Avantageusement, on obtient ainsi une image reconstruite qui ne se présente pas sous la forme d'une matrice de vecteurs qu'il faut désassembler. Il est ainsi possible de gagner du temps de calcul, des ressources de calcul et de la mémoire en s'affranchissant de l'opération de transformation de la matrice de vecteurs de l'image reconstruite en l'image reconstruite entière, dans laquelle chaque pixel du motif de base correspond à un filtre de convolution.

La transformation en filtres de convolution peut aussi s'appliquer à la matrice de démosaïçage $D_2$ d'une image mosaïque multi-spectrale.

L'invention permet également la mise en œuvre d'une méthode d'optimisation spectrale des fonctions de transmission des filtres et de l'arrangement des filtres sur un motif de base d'une mosaïque.

À cette fin, on utilise un apprentissage du filtre ou matrice de démosaïçage utilisant la méthode des moindres carrés avec un voisinage réduit 30 selon l'invention. La matrice de démosaïçage peut être, comme on l'a vue précédemment et notamment dans l'expression (1021), exprimée à l'aide des fonctions spectrales des filtres $F$. A l'aide de la matrice de démosaïçage, il est possible de calculer les critères de qualité $MSE$ (pour Mean Square Error ou erreur quadratique moyenne) et $\Delta E$ de la reconstruction de l'image captée par le troisième capteur 55, en une image couleur à $P$ composantes. Il est ainsi possible d'optimiser les paramètres des fonctions spectrales des filtres afin de maximiser les critères de qualité de l'image rendue.

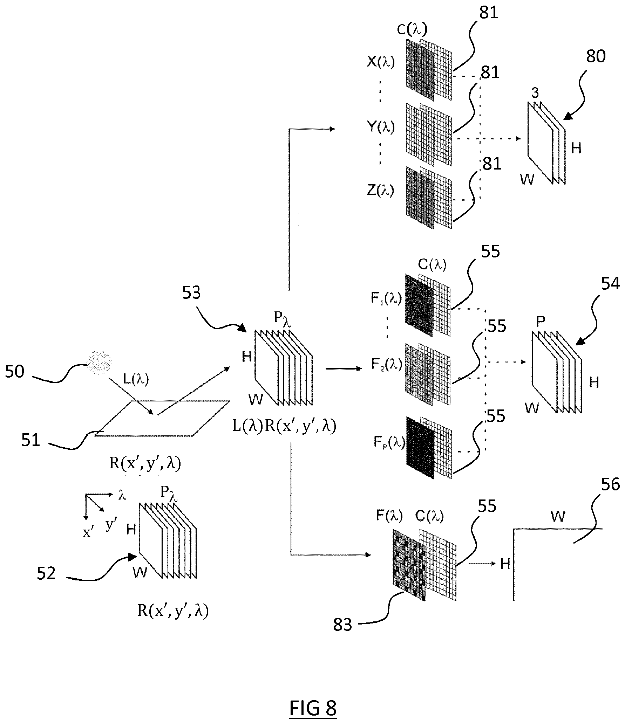

Tel que représenté sur la figure 8, à partir d'une image acquise selon le principe représenté sur la figure 1 et en utilisant le procédé selon l'invention, on peut reconstruire une image à $P$ composantes de couleur. Il est aussi possible en utilisant l'équation (1016) et les suivantes de reconstruire une image rendue dans un espace trichromatique normalisé comme l'espace CIE 1931-XYZ.

Sur la figure 8, un modèle de formation d'une image propose une reconstruction d'une image à partir d'une image de réflectance multi-spectrale 52 parmi :

- une image à trois composantes 80 dans l'espace trichromatique CIE 1931-XYZ, rendue par l'expression $y_{XYZ} = FtoXYZ \times F^T LCz$ en partant de l'image de réflectance multi-spectrale 52, chacune des trois composantes correspondant à l'un des filtres $X(\lambda)$, $Y(\lambda)$, $Z(\lambda)$ ;
- une image multi-composantes 54 à $P$ composantes correspondant chacune à la sortie d'un des filtres $F_1(\lambda)$, $F_2(\lambda)$, ..., $F_P(\lambda)$ ;
- une image mosaïque 56 correspondant à l'image acquise par le troisième capteur 55 directement à travers une troisième mosaïque de filtres 83 de fonction spectrale $F(\lambda)$ sous la forme d'une matrice de vecteurs dont les vecteurs sont les fonctions spectrales des filtres $F_1(1)$, $F_2(1)$, ..., $F_P(1)$.

L'image de radiance 53 peut être mesurée par un premier système d'imagerie idéal théorique qui comprend un système de division du flux lumineux en trois composantes. Chacune des composantes passe au travers des filtres $X(\lambda)$, $Y(\lambda)$, $Z(\lambda)$ et est ensuite mesurée par un quatrième capteur idéal 81. $C(\lambda)$ est la sensibilité spectrale du chemin optique de la caméra y compris du capteur, mais sans la mosaïque de filtres. Un tel système d'imagerie idéale capture directement les coordonnées $X$, $Y$, $Z$ de chaque pixel dans l'espace colorimétrique CIE 1931-XYZ et produit directement une image couleur 80 dite idéale, à trois composantes dans l'espace colorimétrique CIE 1931-XYZ.

Un deuxième système d'imagerie peut être composé de $P$ filtres de couleurs dont la fonction de transmission est données par $F_{i=1...P}(\lambda)$. La lumière passe au travers de chacun de ces $P$ filtres, elle est ensuite mesurée par un troisième capteur 55. Le troisième capteur 55 produit une image multi-composantes 54 à $P$ composantes de couleur, correspondant chacune à un des $P$ filtres $F_i(\lambda)$. La sensibilité spectrale du chemin optique de la caméra y compris le troisième capteur 55, mais sans la mosaïque de filtres, est $C(\lambda)$. Alternativement il est possible de considérer que $C(\lambda)$ est uniquement la sensibilité spectrale du capteur.

Un troisième système d'imagerie est celui que l'on cherche à modéliser. Il est composé d'une deuxième matrice, ou mosaïque, de filtres 83 de P couleurs différentes disposées sur le premier motif de base 6 et dupliqué à la taille du troisième capteur 55. Le troisième système d'imagerie comprend également le troisième capteur 55.

À partir de la première matrice de vecteurs $z_0$, on peut construire une matrice $y_{XYZ}$ de vecteurs correspondant à l'image idéale de composantes $XYZ$ telle que :

$$y_{XYZ} = XYZ^T L_0 z_0 \qquad (1027)$$

avec, par exemple :

$$XYZ = \begin{bmatrix} X(380) & Y(380) & Z(380) \\ X(381) & Y(381) & Z(381) \\ \vdots & \vdots & \vdots \\ X(780) & Y(780) & Z(780) \end{bmatrix} \quad (1028)$$

$$L_0 = \begin{bmatrix} L(380) & 0 & \cdots & 0 \\ 0 & L(381) & \cdots & \vdots \\ \vdots & \cdots & \ddots & \vdots \\ 0 & \cdots & \cdots & L(780) \end{bmatrix} \qquad (1029)$$

On a également :

$$C_0 = \begin{bmatrix} C(380) & 0 & \cdots & 0 \\ 0 & C(381) & \cdots & \vdots \\ \vdots & \cdots & \ddots & \vdots \\ 0 & \cdots & \cdots & C(780) \end{bmatrix} \qquad (1030)$$

La matrice $y_{XYZ}$ est de taille $3 \times HW$ et peut être transformée en une image de taille $H \times W \times 3$ comprenant les trois composantes $XYZ$ pour chaque pixel de l'image reconstruite.

A partir de la troisième matrice $z_1$ de taille $n_h n_w P_\lambda \times HW(hw)$ la matrice de démosaïçage $D_2$ peut s'écrire selon l'expression (1021). :

Cette écriture de $D_2$ permet de calculer une fois pour toute la matrice de corrélation $R'$ pour l'ensemble des images de la base de données d'images de références. Ceci permet de calculer la matrice de démosaïçage $D_1$ pour des mosaïques de filtres définies à postériori et encodées dans la matrice $F_1$ des fonctions spectrales des filtres. Ainsi, le modèle de $D_2$ selon l'expression (1031) permet avantageusement une expression directe de l'opérateur ou matrice de démosaïçage $D_2$ en fonction des données du problème que l'on cherche à résoudre, à savoir une optimisation des fonctions spectrales des filtres de la mosaïque de filtres. Ainsi il est possible d'obtenir $F_1$ de façon à optimiser la qualité de la reconstruction des images acquises.

Les critères d'optimisation utilisés sont les critères de qualité de reconstruction d'images : spatial $MSE$ et colorimétrique $\Delta E$.

Les critères d'optimisation sont calculés entre une image idéale 80, rendue par un quatrième capteur idéal 81 à partir de l'image multi-spectrale de réflectance 52, et une image mosaïque 56 acquise à travers la troisième mosaïque de filtres 83, démosaïçée, c'est à dire dématricée, et convertie dans un espace colorimétrique permettant le calcul des critères d'optimisation.

Pour le calcul des critères d'optimisation, il est possible de se placer dans l'espace sRGB ou tout autre espace apparenté comme Adobe®RGB. Pour se placer dans l'espace sRGB, on réalise les opérations précédemment décrites c'est-à-dire la conversion dans l'espace de couleur trichromatique normalisé CIE 1931 - XYZ en utilisant les équations (1010) et (1011) puis une conversion dans l'espace sRGB à l'aide des équations (1016), (1017), (1018).

Il est également possible d'utiliser un autre espace de couleur. Par exemple un espace couleur pouvant s'exprimer à partir de l'espace XYZ peut être obtenu en modifiant la matrice *A*. Les autres espaces nécessitent de remplacer *FtoXYZ*. Par exemple si l'on appelle *ABC* un espace de destination, il est nécessaire d'estimer *FtoABC* en remplaçant *XYZ* par *ABC* dans l'expression (1010).

Il est aussi possible de calculer un critère de type *MSE* ou un critère de type *PSNR*. Le *PSNR* (Peak To Noise Ratio) est une mesure de distorsion colorimétrique de l'image. Pour deux images multi-composantes exprimées dans l'espace sRGB, *I'(x',y',c)* et *K'(x',y',c)*, normalisées entre 0 et 1, avec *c* l'une des trois composantes de couleur, le calcul du critère *MSE* s'effectue ainsi :

$$MSE = \frac{1}{HWP} \sum_{x\prime=1..H} \sum_{y\prime=1..W} \sum_{c=1..P} (I'(x',y',c) - K'(x',y',c))^2 \qquad (1031)$$

Le critère PNSR se calcule de la manière suivante :

$$PSNR = 10 \log_{10} \frac{1}{MSE} \qquad (1032)$$

Le calcul de $\Delta E$ est réalisé en approximant le calcul non linéaire par une fonction linéaire par morceaux de la manière suivante, pour deux images *I'* et *K'* exprimées dans le repère XYZ :

$$\Delta E = \sqrt{\frac{1}{HW} \sum_{x'=1..H} \sum_{y'=1..W} \quad (I'(x',y',c) - K'(x',y',c))} \qquad (1033)$$

dans laquelle :

$$K'' = \frac{1}{3} \begin{bmatrix} 0 & 116 & 0 \\ 500 & -500 & 0 \\ 0 & 200 & -200 \end{bmatrix} diag(XYZ.diag(XYZ^T L))^{-1} \qquad (1034)$$

où *diag* est une fonction qui place un vecteur dans la diagonale d'une matrice.

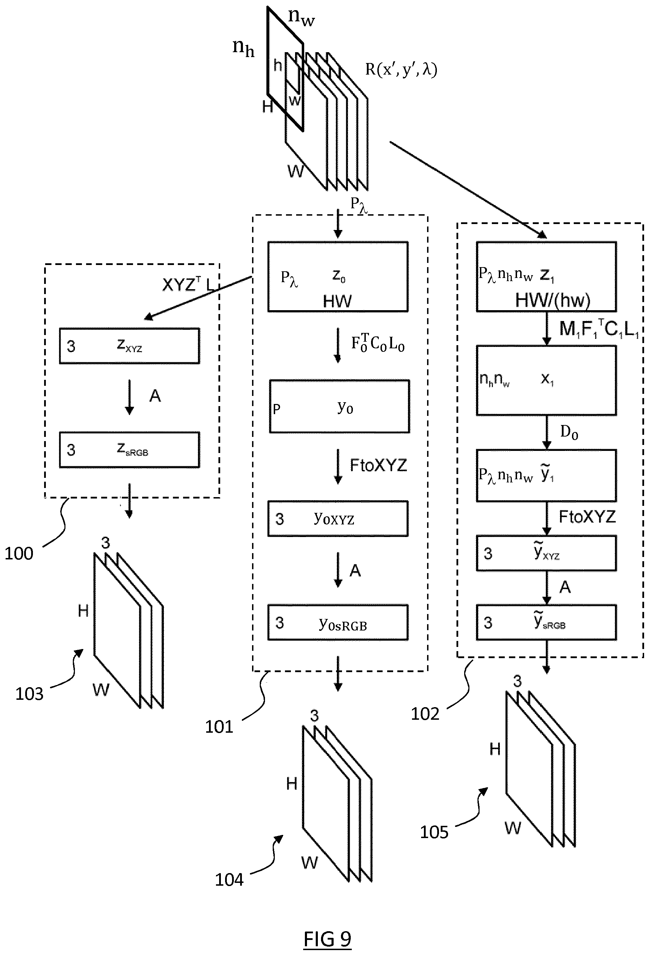

La figure 9 représente les différentes opérations réalisées sur l'image de réflectance *R(x', y', λ)*.

Tel que représenté sur la figure 9, trois images différentes sont produites :

- une première image 103 à trois composantes dans l'espace colorimétrique CIE 1931-XYZ telle que l'image couleur idéale 80 ;
- une deuxième image 104 à trois composantes provenant du troisième capteur 55 sur lequel sont positionnés trois filtres de couleurs, telle l'image multi-composantes 54 ;
- une troisième image 105 à trois composantes provenant du troisième capteur 55 sur lequel est positionnée une troisième mosaïque de filtres 83, correspondant à l'image mosaïque 56.

Chaque image est issue d'une parmi trois voies 100, 101, 102 de traitements différentes en sortie des troisième et quatrième capteurs 55, 81.

Une première voie 100 utilise un premier traitement d'une deuxième voie de traitements 101 qui consiste à transformer l'image de réflectance multispectrale *R(x',y',λ)* en une matrice $z_0$ de *HW* vecteurs de taille $P_\lambda$ tel que représenté sur la figure 6a. Il est également possible de partir de l'image de radiance *L(λ)R(x',y',λ)*.

Ensuite un premier traitement de la première voie de traitements 100 est une projection de la matrice $z_0$ dans l'espace XYZ tel que décrit par l'équation (1027). On obtient une matrice de vecteurs $z_{XYZ}$ de taille $3 \times HW$. Ensuite, la matrice $z_{XYZ}$ est projetée dans l'espace sRGB en lui appliquant la matrice *A* tel que décrit dans les équations (1017) et (1018). On obtient une nouvelle matrice $z_{sRGB}$ de taille $3 \times HW$. La matrice $z_{sRGB}$ peut ensuite être « dépliée » pour reconstituer la première image 103 à trois composantes de taille $H \times W$ dans l'espace colorimétrique sRGB.

La deuxième voie 101 réalise sur le vecteur $z_0$ l'opération représentée sur la figure 6b pour obtenir la matrice de vecteurs $y_0$ selon l'équation (1019). La matrice de vecteurs $y_0$ est ensuite transformée, tel que représenté sur la figure 2b, en une matrice de $HW/(hw)$ vecteurs de dimension $Phw$. Ensuite la matrice de vecteurs $y_0$ est projetée dans l'espace XYZ par la fonction $FtoXYZ$ tel qu'explicité par la relation (1011). On obtient ainsi une matrice de trois vecteurs $y_{0XYZ}$ de taille $HW$. Ensuite, la matrice $y_{0XYZ}$ est projetée dans l'espace sRGB en lui appliquant la matrice $A$ tel que décrit dans les équations (1017) et (1018). On obtient une nouvelle matrice $y_{0sRGB}$ de taille $3 \times HW$. La matrice $y_{0sRGB}$ peut ensuite être « dépliée » pour reconstituer la deuxième image 104 à trois composantes de taille $H \times W$ dans l'espace colorimétrique sRGB.

Une troisième voie 102, partant de l'image de réflectance multispectrale $R(x',y',\lambda)$ acquise par le troisième capteur 55 recouvert de la troisième mosaïque de filtres 83 donne une matrice $z_1$ telle que représentée sur la figure 6a de taille $P_\lambda n_h n_w \times HW(hw)$. A partir de la matrice $z_1$ on peut obtenir une matrice $x_1$ de taille $n_h n_w \times HW/(hw)$ telle que

$$x_1 = M_1 F_1^T C_1 L_1 z_1$$ selon la relation (1023). Ensuite en appliquant une matrice de démosaïçage $D_0$ sous la forme de la matrice de démosaïçage $D_2$ décrite dans l'expression (1021), on obtient $\tilde{y}_1$ de taille $P_\lambda n_h n_w \times HW/(hw)$ telle que $\tilde{y}_1 = D_0 x_1$. On applique alors à $\tilde{y}_1$ la transformation $FtoXYZ$ pour obtenir l'image résultante dans l'espace XYZ selon l'équation (1011) : $\tilde{y}_{XYZ} = (I_{hw} \otimes FtoXYZ)\tilde{y}_1$ de taille $3 \times HW$. Pour finir en appliquant la matrice A telle que définie par l'expression (1018), on obtient $\tilde{y}_{sRGB}$ telle que $\tilde{y}_{sRGB} = A(I_{hw} \otimes FtoXYZ)\tilde{y}_{XYZ}$, de taille $3 \times HW$. La matrice $\tilde{y}_{sRGB}$ obtenue est ensuite « dépliée » afin de reconstruire la troisième image 105 à trois composantes dans l'espace colorimétrique sRGB.

À partir des différentes matrices de vecteurs représentées sur la figure 9, on peut calculer plusieurs $\Delta E$ différents : $\Delta E_1$, $\Delta E_2$, $\Delta E_3$ et un *MSE,* que l'on cherche à minimiser pour optimiser les fonctions spectrales et leur répartition sur la troisième mosaïque de filtres 83. Les calculs des différents $\Delta E$ sont réalisés d'après les formules (1012), (1013), (1014) et (1015).

Un premier $\Delta E_1$ est calculé entre l'image contenue dans la matrice $z_{XYZ}$ rendue directement à partir de l'image de réflectance multi-spectrale $R(x',y',\lambda)$ et l'image acquise directement à travers les filtres $F_1$, $F_2$, $F_3$ et passée ensuite par la conversion vers l'espace colorimétrique XYZ : $y_{0XYZ}$.

Un deuxième $\Delta E_2$ est calculé entre l'image contenue dans la matrice $z_{XYZ}$ et l'image exprimée dans l'espace colorimétrique XYZ après acquisition par l'intermédiaire de la troisième mosaïque de filtres 83 : $\tilde{y}_{XYZ}$.

Un troisième $\Delta E_3$ est un critère purement spectral ne faisant pas appel à la reconstruction d'une image pour tester l'aptitude des filtres à rendre les couleurs. Pour calculer le troisième $\Delta E_3$, on utilise les spectres d'une charte ou mire de couleurs de MacBeth qui comprend 24 couleurs. Alternativement, il est aussi possible d'utiliser n'importe quelle autre base de référence spectrale. À partir des données multi-spectrales de réflectance des 24 carrés de la mire de MacBeth, on applique d'une part directement la transformation dans l'espace colorimétrique XYZ pour obtenir une quatrième image et d'autre part on applique les filtres $F_1$, $F_2$, $F_3$ et la sensibilité du chemin optique de la caméra puis une conversion de l'image en sortie du troisième capteur 55 dans l'espace colorimétrique XYZ pour obtenir une cinquième image. Les quatrième et cinquième images sont utilisées pour calculer le troisième $\Delta E_3$.

Les *MSE* et *PNSR* sont quant à eux calculés entre la première image 103 rendue directement à partir de l'image multi-spectrales de réflectance et la troisième image rendue à partir de l'image multi-spectrales de réflectance après son passage par la matrice de mosaïque 83 et le troisième capteur 55.

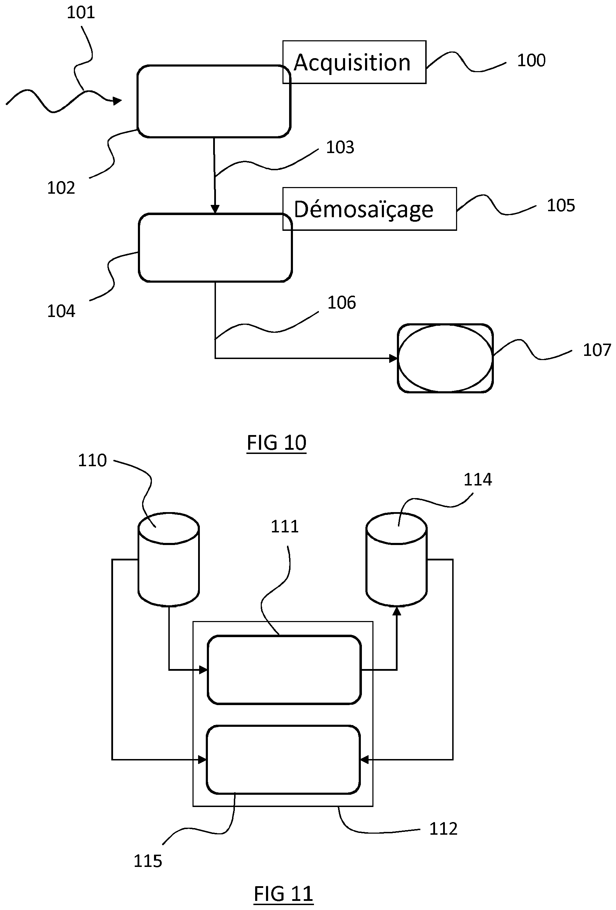

La figure 10 représente le dispositif et le procédé de démosaïçage selon l'invention.

Une première étape 100 est une étape d'acquisition d'une image couleur 101 par un dispositif d'acquisition d'images 102. Le dispositif d'acquisition d'images 102 comprend un capteur 2, 55 tel que représenté sur les figures 1a, 5 et 8. Le dispositif d'acquisition d'images 102 comprend en outre un filtre mosaïque 3, 57, 83, ou mosaïque de filtres, sous la forme d'une matrice de $HW$ filtres telle que représentée sur les figures 1a, 5 et 8. La mosaïque de filtres 3, 57, 83 est appliquée sur le capteur. Le dispositif comprend également un dispositif optique qui fait converger la lumière captée par la caméra vers le capteur 2, 55 équipé du filtre mosaïque 3, 57, 83. Ainsi, avant d'atteindre une cellule du capteur 2, 55, la lumière passe à travers l'un des filtres de couleur 7 de la mosaïque de filtres 3, 57, 83. Un signal brut 103 provenant du capteur 2, 55 peut se représenter sous la forme d'une image mosaïque 40 de taille $H \times W$ telle que représentée sur la figure 4a. L'image mosaïque 40 est ensuite transmise à un premier calculateur ou ordinateur 104 qui réalise une opération de démosaïçage 105 selon l'invention. L'opération de démosaïçage consiste à multiplier l'image mosaïque 40 représentée sous forme matricielle $x_1$ telle que représentée sur la figure 4a par une matrice de démosaïçage $D_0$, $D_1$, $D_2$. Le résultat de l'opération de démosaïçage 105 est une matrice de vecteurs qui est transformée en image rendue à plusieurs composantes de couleur selon le processus inverse à celui représenté sur la figure 2b qui consiste à « déplier » la matrice de vecteurs pour la représenter sous la forme d'une image à plusieurs composantes. L'image reconstruite 106 peut ensuite être transmise à un moyen adapté à son exploitation comme un afficheur 107.

La figure 11 représente un procédé et son dispositif de construction d'une matrice de démosaïçage.

Le dispositif de construction d'une matrice de démosaïçage comprend une première base de données 110. La première base de données 110 comprend des images dites de références. Les images de références peuvent être des images multi-composantes, ou des images multi-spectrales. Les images de références peuvent également être des images hors du spectre visible. À partir de la première base de données 110, une première étape de construction d'une matrice de démosaïçage est une étape de modélisation d'images mosaïques issues d'un capteur recouvert d'une mosaïque de filtres. La modélisation est réalisée par une application de simulation 111 qui implémente un modèle du capteur 2, 55. L'application de simulation 111 peut être exécutée par un ou plusieurs processeurs d'un deuxième calculateur, ou ordinateur 112. Alternativement, l'application de simulation 111 peut être exécutée par le premier calculateur 104.

À partir de chaque image de référence, l'application de simulation 111 produit une image mosaïque qui vient peupler une deuxième base de données 114 d'images dites mosaïques.

Une fois la deuxième base de données construite 114, la deuxième étape 115 du procédé de construction de la matrice de démosaïçage peut être mise en œuvre. Le procédé de construction de la matrice de démosaïçage peut être mis en œuvre par un programme d'ordinateur qui s'exécute sur un ou plusieurs processeurs du deuxième calculateur 112. Alternativement, le procédé de construction de la matrice de démosaïçage peut être mis en œuvre sur un troisième calculateur, ou ordinateur non représenté, ou encore le premier calculateur 104. Le procédé de construction d'une matrice de démosaïçage utilise les images des deux bases de données 110, 114. La première base de données 110 est utilisée afin de produire une image mosaïque à partir d'une image de référence en lui appliquant une matrice de démosaïçage sous test, c'est-à-dire mettant en œuvre le procédé de démosaïçage selon l'invention. L'image mosaïque ainsi produite est alors comparée à l'image mosaïque correspondant à l'image de référence dans la deuxième base de données 114. Cette comparaison consiste à calculer une erreur entre la matrice mosaïque produite par simulation et la matrice mosaïque construite par application de la matrice de démosaïçage sous test. Le procédé de construction de la matrice de démosaïçage est un procédé itératif : si l'erreur de construction de la matrice mosaïque est inférieure à un seuil, le procédé s'arrête. Dans le cas inverse, une nouvelle matrice de démosaïçage est déterminée et testée.

Les différents modes de réalisation de la présente invention comprennent diverses étapes. Ces étapes peuvent être mises en œuvre par des instructions d'une machine exécutable au moyen d'un microprocesseur par exemple.

Alternativement, ces étapes peuvent être réalisées par des circuits intégrés spécifiques comprenant une logique câblée pour exécuter les étapes, ou par toute combinaison de composants programmables et composants personnalisés.

La présente invention peut également être fournie sous forme d'un produit programme d'ordinateur qui peut comprendre un support mémoire informatique non-transitoire contenant des instructions exécutables sur une machine informatique, ces instructions pouvant être utilisées pour programmer un ordinateur (ou tout autre dispositif électronique) pour exécuter les procédés.

**Revendications**

1. Procédé de reconstruction d'une image couleur, acquise par un capteur photosensible (2) de taille $H \times W$, recouvert d'une mosaïque (3), de taille $H \times W$, de $P$ filtres (7) de différentes couleurs composant un motif de base (6) de taille $h \times w$ tel que $h < H$ et $w < W$, ledit motif de base (6) de la mosaïque de filtres (3) se répétant de façon à couvrir la mosaïque de filtres (3) sans recouvrement entre les motifs de base (6), ledit procédé étant mis en œuvre par ordinateur et étant **caractérisé en ce qu'**il comprend au moins les étapes suivantes :

   • une première étape préalable de construction d'une matrice de démosaïçage $D$ à partir d'une simulation utilisant une première base de données de $N$ images $I_i$, $i \in [1,...,N]$, à $P$ composantes de couleurs, dites images de référence, pour produire une deuxième base de données de $N$ images $J_i, i \in [1,...,N]$ simulant des images rendues issues du capteur (2), après acquisition par ledit capteur (2) des images de la première base de données, lesdites images de référence $I_i$ et rendues $J_i$ étant respectivement représentées sous la forme de matrices de $HW/(hw)$ vecteurs $y_1$, $x_1$ tels que :

   - les composantes de $y_1$ sont les $P$ composantes d'un voisinage réduit de taille $n_h \times n_w$ d'un des $HW/(hw)$ motifs de base appliqué à l'image de référence $I_i$,
   - les composantes de $x_1$ sont les composantes d'un voisinage réduit de taille $n_h \times n_w$ de l'un des $HW/(hw)$ motifs de base appliqué à l'image rendue $J_i$,
   avec $n_h > h$ et $n_w > w$ ;

   • une deuxième étape de reconstruction d'une image couleur réalisant le produit de la matrice de démosaïçage $D$ avec une représentation matricielle d'une image mosaïque (5) provenant du capteur (2) après acquisition de l'image couleur par ledit capteur (2), ledit produit de la matrice de démosaïçage $D$ avec la représentation matricielle de l'image mosaïque (5) mettant en œuvre une interpolation de la couleur de chaque pixel de l'image mosaïque (5) en fonction d'un voisinage, de taille $n_h \times n_w$ pixels, d'un motif de base (43) de taille $h \times w$, correspondant au motif de base (6) de la mosaïque de filtres (3).

2. Procédé selon la revendication 1, **caractérisé en ce que** $n_h n_w = Phw$.

3. Procédé selon l'une quelconque des revendications précédentes, **caractérisé en ce qu'**une première matrice de démosaïçage $D_1$ s'exprime comme une espérance mathématique $E$ calculée sur les $N$ images de référence de la première base de données : $D_1 = E^{i=1..N}\{yx_1^T(x_1 x_1^T)^{-1}\}$ , avec $y$ une matrice de $HW/(hw)$ vecteurs de taille $Phw$ représentant l'image couleur.

4. Procédé selon la revendication précédente, **caractérisé en ce que** la première matrice de démosaïçage $D_1$ s'exprime ainsi : $D_1 = S_1 R M_1^T(M_1 R M_1^T)^{-1}$ avec $x_1 = M_1 y_1$, $M_1$ étant une matrice de projection de $y_1$ sur $x_1$ , $y = S_1 y_1$, $S_1$ étant une matrice de réduction du voisinage du vecteur $y_1$ et de transformation du vecteur $y_1$ en $y$ , et $R = \frac{1}{NPHW} E^{i=1..N}\{y_1 y_1^T\}$ étant une matrice de corrélation des images résolues de la première base de données exprimées en fonction des voisinages réduits de taille $n_h \times n_w$.

5. Procédé selon l'une quelconque des revendications précédentes, **caractérisé en ce que** la matrice de démosaïçage s'exprime en fonction de la sensibilité spectrale du capteur (2) et des fonctions spectrales des $P$ filtres (7) de couleurs différentes.

6. Procédé selon la revendication précédente, **caractérisé en ce que** la première base de données comprenant des images multi-spectrales de réflectance, une deuxième matrice de démosaïçage $D_2$ est définie par l'expression :

$D_2 = F^T C L S_1 R' L_1^T C_1^T F_1 M_1^T (M_1 F_1^T C_1 L_1 R' L_1^T C_1^T F_1 M_1^T)^{-1}$ , avec $R' = \frac{1}{NHWP_\lambda} E^{i=1..N}\{z_1 z_1^T\}$ , la deuxième matrice de démosaïçage $D_2$ étant construite selon les étapes suivantes :

• calcul d'une matrice de vecteurs $y_0$ représentant une image à $P$ composantes en fonction d'une matrice de vecteurs $z_0$ représentant une image multi-spectrale de réflectance obtenue à partir d'une réflexion d'un objet éclairé par une source de lumière de densité spectrale de puissance $L(\lambda)$, $\lambda$ étant une composante spectrale, tel que : $y_0 = F_0^T C_0 L_0 z_0$ , avec $F_0$ une matrice de taille $P_\lambda \times P$ de fonctions de transmission spectrale des filtres de la mosaïque (3), avec $C_0$ une matrice diagonale de taille $P_\lambda \times P_\lambda$ d'une sensibilité spectrale du capteur, $L_0$ une matrice diagonale de taille $P_\lambda \times P_\lambda$ des densités spectrales de puissance de la source de lumière ;
• construction de la matrice de vecteurs $y$ à partir de l'image multi-composantes et d'une matrice de vecteurs $z$, construite à partir de l'image multi-spectrale de réflectance, lesdites matrices de vecteurs $y$ et $z$ comprenant ledit motif de base, tels que $y = F^T C L z$ avec $F = I_{hw} \otimes F_0$, $I_{hw}$ étant une matrice identité de dimensions $hw \times hw$, $C = I_{hw} \otimes C_0$, et $L = I_{hw} \otimes L_0$ ;
• construction d'une matrice de vecteurs $z_1$ composée des voisinages réduits de taille $n_h \times n_w$ du motif de base de l'image de multi-spectrale de réflectance telle que $y_1 = F_1^T C_1 L_1 z_1$ , $y_1$ étant une matrice composée des voisinages réduits de taille $n_h \times n_w$ du motif de base de taille $h \times w$ de l'image spectrale multi-spectrale de réflectance, avec $F_1 = I_{n_h n_w} \otimes F_0$, $I_{n_h n_w}$ étant une matrice identité de dimensions $n_h n_w \times n_h n_w$, $L_1 = I_{n_h n_w} \otimes L_0$, et $C_1 = I_{n_h n_w} \otimes C_0$ ;
• construction de la deuxième matrice de démosaïçage $D_2$ avec $M_1$ étant une matrice de projection de $y_1$ sur $x_1$ et $S_1$ étant une matrice de réduction du voisinage du vecteur $y_1$ et de transformation en $y$.

7. Procédé selon la revendication précédente, **caractérisé en ce que** $C_0$ est un produit des sensibilités spectrales de composants du chemin optique de la caméra par la sensibilité spectrale du capteur, lesdits composants comprenant au moins l'un parmi : un objectif de la caméra, un filtre infrarouge, un filtre spatial passe-bas, un système de micros-lentilles.

8.  Procédé selon l'une quelconque des revendications précédentes, **caractérisé en ce que** chaque ligne de la matrice de démosaïçage $D$, $D_1$, $D_2$ s'exprime comme un filtre de convolution.

9.  Système de traitement de données comprenant des moyens de mise en œuvre des étapes du procédé selon l'une quelconque des revendications précédentes.

10. Produit programme d'ordinateur comprenant des instructions qui lorsque le programme est exécuté par un ordinateur, conduisent l'ordinateur à mettre en œuvre les étapes du procédé selon l'une quelconque des revendications 1 à 8.

11. Procédé d'optimisation de fonctions spectrales de filtres et d'arrangement des filtres (7) sur une mosaïque (3) de $P$ filtres (7) de couleurs différentes, répétés de manière à remplir un motif de base (6) de taille $h \times w$, ledit motif de base (6) se répétant de façon à couvrir la mosaïque de filtres (3), ladite mosaïque de filtres (3) étant appliquée sur un capteur photosensible (2), ledit procédé étant **caractérisé en ce qu'**il comprend une optimisation multicritères par minimisation d'une erreur de restitution colorimétrique et par minimisation d'une erreur quadratique moyenne entre une image provenant d'un capteur idéal, acquise à partir d'une image d'une base de données d'images de référence, et une image provenant d'un capteur recouvert de la mosaïque (3) de $P$ filtres (7) différents, acquise à partir de la même image de la base de données d'images de référence, ladite image acquise par le capteur (2) recouvert de la mosaïque (3) de filtres (7) étant reconstruite par le procédé selon l'une quelconque des revendications 1 à 7.

12. Procédé selon la revendication 11, **caractérisé en ce qu'**il comprend en outre une minimisation d'une erreur de restitution colorimétrique entre l'image provenant du capteur idéal acquise à partir de l'image de la base de données d'images, et une image provenant d'un capteur recouvert d'une série de $P$ filtres, chacun des $P$ filtres recouvrant la totalité du capteur, ladite image étant acquise à partir de la même image de la base de donnée.

13. Procédé selon la revendication 12, **caractérisé en ce qu'**il comprend en outre une minimisation d'une erreur de restitution colorimétrique entre une mire de MacBeth acquise par un capteur parfait et une mire de MacBeth acquise par un capteur muni de la mosaïque des $P$ filtres.

14. Système de traitement de données comprenant des moyens de mise en œuvre des étapes du procédé selon les revendications 11 à 13.

15. Produit programme d'ordinateur comprenant des instructions qui lorsque le programme est exécuté par un ordinateur, conduisent l'ordinateur à mettre en œuvre les étapes du procédé selon l'une quelconque des revendications 11 à 13.

**Patentansprüche**

1.  Verfahren zur Rekonstruktion eines Farbbildes, das von einem lichtempfindlichen Sensor (2) der Größe $H \times W$ aufgenommen wurde, der von einem Mosaik (3) der Größe $H \times W$ aus $P$ Filtern (7) verschiedener Farben bedeckt ist, die ein Grundmuster (6) der Größe $h \times w$ bilden, wobei $h < H$ und $w < W$ gilt, wobei das Grundmuster (6) des Filtermosaiks (3) wiederholt wird, um das Filtermosaik (3) ohne Überlappung zwischen den Grundmustern (6) zu bedecken, wobei das Verfahren durch einen Computer implementiert wird und **dadurch gekennzeichnet ist, dass** es mindestens die folgenden Schritte umfasst:

    • einen ersten vorbereitenden Schritt des Konstruierens einer Demosaicing-Matrix $D$ ausgehend von einer Simulation unter Verwendung einer ersten Datenbank von $N$ Bildern $I_i$, $i \in [1, \ldots, N]$ mit $P$ Farbkomponenten, die als Referenzbilder bezeichnet werden, um eine zweite Datenbank von $N$ Bildern $J_i$, $i \in [1, \ldots, N]$ zu erzeugen, die gerenderte Bilder des Sensors (2) simuliert, nachdem der Sensor (2) die Bilder der ersten Datenbank erfasst hat, wobei die Referenzbilder $I_i$ und die gerenderten Bilder $J_i$ in Form von Matrizen von $HW / (h\,w)$ Vektoren $y_1$, $x_1$ so dargestellt werden, dass :

      - die Komponenten von $y_1$ die $P$ Komponenten einer reduzierten Umgebung der Größe $n_h \times n_w$ eines der $HW / (hw)$ Grundmuster sind, die auf das Referenzbild $I_i$ angewendet werden,
      - die Komponenten von $x_1$ die Komponenten einer reduzierten Umgebung der Größe $n_h \times n_w$ eines der $HW / (h\,w)$ Grundmuster sind, die auf das gerenderte Bild $J_i$ angewendet werden,
      mit $n_h > h$ und $n_w > w$;

• einen zweiten Schritt der Rekonstruktion eines Farbbildes durch Erzeugung des Produkts der Demosaicing-Matrix $D$ mit einer Matrixdarstellung eines Mosaikbildes (5), das von dem Sensor (2) nach der Erfassung des Farbbildes durch den Sensor (2) kommt,

wobei das Produkt der Demosaicing-Matrix $D$ mit der Matrixdarstellung des Mosaikbildes (5) eine Interpolation der Farbe jedes Pixels des Mosaikbildes (5) in Abhängigkeit von einer Umgebung der Größe von $n_h \times n_w$ Pixel eines Grundmusters (43) der Größe $h \times w$, das dem Grundmuster (6) des Filtermosaiks (3) entspricht, durchführt.

2. Verfahren nach Anspruch 1, **dadurch gekennzeichnet, dass** $n_h\, n_w = P\, h\, w$ gilt.

3. Verfahren nach einem der vorhergehenden Ansprüche, **dadurch gekennzeichnet, dass** eine erste Demosaicing-Matrix $D_1$ die Form eines mathematischen Erwartungswerts $E$ hat, der über die $N$ Referenzbilder der ersten Datenbank berechnet wird als : $D_1 = E^{i=1..N}\{y\, x_1^T (x_1\, x_1^T)^{-1}\}$ wobei $y$ eine Matrix aus $HW / (hw)$ Vektoren der Größe $Phw$ ist, die das Farbbild darstellt.

4. Verfahren nach dem vorhergehenden Anspruch, **dadurch gekennzeichnet, dass** die erste Demosaicing-Matrix $D_1$ wie folgt ausgedrückt wird : $D_1 = S_1 R M_1^T (M_1 R M_1^T)^{-1}$ mit $x_1 = M_1 y_1$, wobei $M_1$ eine Projektionsmatrix von $y_1$ auf $x_1$ ist, wobei $y = S_1 y_1$ gilt, wobei $S_1$ eine Matrix zur Reduzierung der Umgebung des Vektors $y_1$ und zur Transformation des Vektors $y_1$, in $y$ ist, und wobei $R = \dfrac{1}{NPHW} E^{i=1..N}\{y_1 y_1^T\}$ eine Korrelationsmatrix der aufgelösten Bilder der ersten Datenbank ist, die eine Funktion der reduzierten Umgebungen der Größe $n_h \times n_w$ ist.

5. Verfahren nach einem der vorhergehenden Ansprüche, **dadurch gekennzeichnet, dass** die Demosaicing-Matrix eine Funktion der spektralen Empfindlichkeit des Sensors (2) und der spektralen Funktionen der P-Filter (7) verschiedener Farben ist.

6. Verfahren nach dem vorhergehenden Anspruch, **dadurch gekennzeichnet, dass** die erste Datenbank, die multispektrale Reflexionsbilder umfasst, wobei eine zweite Demosaicing-Matrix $D_2$ durch den folgenden Ausdruck definiert ist: $D_2 = F^T C L S_1\, R' L_1^T C_1^T F_1\, M_1^T \left( M_1\, F_1^T C_1\, L_1\, R' L_1^T C_1^T F_1\, M_1^T \right)^{-1}$, wobei $R' = \dfrac{1}{NHWP_\lambda} E^{i=1..N}\{z_1 z_1^T\}$ gilt, wobei die zweite Demosaicing-Matrix $D_2$ anhand der folgenden Schritte aufgebaut wird:

• Berechnung einer Vektormatrix $y_0$, die ein Bild mit $P$ Komponenten darstellt, in Abhängigkeit von einer Vektormatrix $z_0$, die ein multispektrales Reflexionsbild darstellt, das aus einer Reflexion eines von einer Lichtquelle beleuchteten Objekts mit einer spektralen Leistungsdichte $L(\lambda)$, wobei $\lambda$ eine spektrale Komponente ist, erhalten wird, so dass $y_0 = F_0^T C_0\, L_0\, z_0$ gilt,

wobei $F_0$ eine Matrix der Größe $P_\lambda \times P$ der spektralen Transmissionsfunktionen der Mosaikfilter (3) ist,
wobei $C_0$ eine Diagonalmatrix der Größe $P_\lambda \times P_\lambda$ einer spektralen Empfindlichkeit des Sensors ist,
wobei $L_0$ eine Diagonalmatrix der Größe $P_\lambda \times P_\lambda$ der spektralen Leistungsdichten der Lichtquelle ist;

• Konstruktion der Vektormatrix $y$ aus dem Mehrkomponentenbild und einer Vektormatrix $z$, die aus dem multispektralen Reflexionsbild konstruiert wird, wobei die Vektormatrizen $y$ und $z$ das Grundmuster umfassen, so dass $y = F^T C L z$ mit $F = I_{hw} \otimes F_0$, wobei $I_{hw}$ eine Einheitsmatrix mit der Dimension $h_w \times h_w$ ist, mit $C = I_{hw} \otimes C_0$ und mit $L = I_{hw} \otimes L_0$;
• Konstruktion einer Vektormatrix $z_1$, die sich aus den reduzierten $n_h \times n_w$ großen Umgebungen des multispektralen Basisreflexionsbildmusters zusammensetzt, so dass $y_1 = F_1^T C_1\, L_1\, z_1$ gilt, wobei $y_1$ eine Matrix ist, die sich aus den reduzierten Umgebungen der Größe $n_h \times n_w$ des Grundmusters der Größe $h \times w$ des multispektralen Reflexionsbildes zusammensetzt, mit $F_1 = I_{n_h n_w} \otimes F_0$, wobei $I_{n_h n_w}$ eine Einheitsmatrix der Dimension $n_h n_w \times n_h n_w$ ist, mit $L_1 = I_{n_h n_w} \otimes L_0$, und $C_1 = I_{n_h n_w} \otimes C_0$;

• Konstruktion der zweiten Demosaicing-Matrix $D_2$, wobei $M_1$ eine Projektionsmatrix von $y_1$ auf $x_1$ ist und $S_1$ eine Reduktionsmatrix der Umgebung des Vektors $y_1$ und der Transformation in $y$ ist.

7. Verfahren nach dem vorhergehenden Anspruch, **dadurch gekennzeichnet, dass** $C_0$ ein Produkt der spektralen Empfindlichkeiten von Komponenten des optischen Weges der Kamera durch die spektrale Empfindlichkeit des Sensors ist, wobei die Komponenten mindestens eines der folgenden Elemente umfassen: ein Kameraobjektiv, ein Infrarotfilter, ein Tiefpass-Raumfilter, ein Mikrolinsensystem.

8. Verfahren nach einem der vorhergehenden Ansprüche, **dadurch gekennzeichnet, dass** jede Zeile der Entmosaikierungsmatrix $D$, $D_1$, $D_2$ als ein Faltungsfilter ausgedrückt wird.

9. Datenverarbeitungssystem mit Mitteln zur Durchführung der Schritte des Verfahrens nach einem der vorangehenden Ansprüche.

10. Computerprogrammprodukt mit Anweisungen, die, wenn das Programm von einem Computer ausgeführt wird, den Computer veranlassen, die Schritte des Verfahrens nach einem der Ansprüche 1 bis 8 auszuführen.

11. Verfahren zur Optimierung von Spektralfunktionen von Filtern und zur Anordnung der Filter (7) auf einem Mosaik (3) von $P$ Filtern (7) verschiedener Farben, die so wiederholt werden, dass sie ein Grundmuster (6) der Größe $h \times w$ ausfüllen, wobei sich das Grundmuster (6) so wiederholt, dass es das Filtermosaik (3) bedeckt, wobei das Filtermosaik (3) auf einen lichtempfindlichen Sensor (2) angewendet wird, wobei das Verfahren **dadurch gekennzeichnet ist, dass** es eine Optimierung mit mehreren Kriterien durch Minimierung eines kolorimetrischen Wiedergabefehlers aufweist und einen mittleren quadratischen Fehler zwischen einem Bild, das von einem idealen Sensors stammt und nach und einem Bild einer Referenzbilddatenbank erfasst wurde, und einem Bild, das von einem Sensor stammt, der mit dem Mosaik (3) von $P$ verschiedenen Filtern (7) bedeckt ist, und das von demselben Bild der Referenzbilddatenbank erfasst wurde, minimiert, wobei das von dem mit dem Mosaik (3) von Filtern (7) bedeckten Sensor (2) erfasste Bild durch das Verfahren nach einem der Ansprüche 1 bis 7 rekonstruiert wurde.

12. Verfahren nach Anspruch 11, **dadurch gekennzeichnet, dass** es ferner die Minimierung eines kolorimetrischen Wiedergabefehlers zwischen dem Bild des idealen Sensors, das aus dem Bild der Bilddatenbank gewonnen wurde, und einem Bild eines Sensors umfasst, der mit einer Reihe von $P$ Filtern abgedeckt ist, umfasst, wobei jeder der $P$ Filter den gesamten Sensor abdeckt und das Bild aus demselben Bild der Datenbank gewonnen wurde.

13. Verfahren nach Anspruch 12, **dadurch gekennzeichnet, dass** es ferner die Minimierung eines kolorimetrischen Wiedergabefehlers zwischen einem MacBeth-Testmuster, das von einem perfekten Sensor erfasst wurde, und einem MacBeth-Testmuster, das von einem mit dem Mosaik aus P Filtern versehenen Sensor erfasst wurde, umfasst.

14. Ein Datenverarbeitungssystem mit Mitteln zur Durchführung der Schritte des Verfahrens nach den Ansprüchen 11 bis 13.

15. Computerprogrammprodukt mit Befehlen, die, wenn das Programm von einem Computer ausgeführt wird, den Computer veranlassen, die Schritte des Verfahrens nach einem der Ansprüche 11 bis 13 auszuführen.

**Claims**

1. Method for reconstructing a colour image acquired by a photosensitive sensor (2) of size $H \times W$, covered with a mosaic (3), of size $H \times W$, of $P$ filters (7) of different colours making up a base pattern (6) of size $h \times w$ such that $h < H$ and $w < W$, said base pattern (6) of the mosaic of filters (3) being repeated so as to cover the mosaic of filters (3) without overlap between the base patterns (6), said method being carried out by computer and being **characterized in that** it comprises at least the following steps:

• a first preliminary step of constructing a demosaicing matrix $D$ starting from a simulation using a first database of $N$ images $I_i, i \in [1,...,N]$, with $P$ colour components, called reference images, for producing a second database of $N$ images $J_i, i \in [1,...,N]$ simulating images produced originating from the sensor (2), after acquisition by said sensor (2) of the images of the first database, said reference images $I_i$ and images produced $J_i$ being represented respectively in the form of matrices of $HW/(hw)$ vectors $y_1$, $x_1$ such that:

- the components of $y_1$ are the $P$ components of a reduced neighbourhood of size $n_h \times n_w$ of one of the $HW/(hw)$ base patterns applied to the reference image $I_i$,
- the components of $x_1$ are the components of a reduced neighbourhood of size $n_h \times n_w$ of one of the $HW/(hw)$ base patterns applied to the image produced $J_i$,

with $n_h > h$ and $n_w > w$;

• a second step of reconstructing a colour image producing the product of the demosaicing matrix $D$ with a matrix representation of a mosaic image (5) originating from the sensor (2) after acquisition of the colour image by said sensor (2), said product of the demosaicing matrix $D$ with the matrix representation of the mosaic image (5) using an interpolation of the colour of each pixel of the mosaic image (5) as a function of a neighbourhood, of size $n_h \times n_w$ pixels, of a base pattern (43) of size $h \times w$, corresponding to the base pattern (6) of the mosaic of filters (3).

2. Method according to claim 1, **characterized in that** $n_h n_w = Phw$.

3. Method according to any one of the preceding claims, **characterized in that** a first demosaicing matrix $D_1$ is expressed as an expected value $E$ calculated on the $N$ reference images of the first database:

$$D_1 = E^{i=1..N}\{yx_1^T(x_1x_1^T)^{-1}\}$$ , where $y$ is a matrix of $HW/(hw)$ vectors of size $Phw$ representing the colour image.

4. Method according to the preceding claim, **characterized in that** the first demosaicing matrix $D_1$ is expressed thus:

$$D_1 = S_1RM_1^T(M_1RM_1^T)^{-1}$$ with $x_1 = M_1y_1$, $M_1$ being a matrix of projection of $y_1$ onto $x_1$, $y = S_1y_1$, $S_1$ being a matrix of reduction of the neighbourhood of the vector $y_1$ and of transformation of the vector $y_1$ into $y$, and

$$R = \frac{1}{NPHW}E^{i=1..N}\{y_1y_1^T\}$$ being a correlation matrix of the resolved images of the first database expressed as a function of the reduced neighbourhoods of size $n_h \times n_w$.

5. Method according to any one of the preceding claims, **characterized in that** the demosaicing matrix is expressed as a function of the spectral sensitivity of the sensor (2) and of the spectral functions of the $P$ filters (7) of different colours.

6. Method according to the preceding claim, **characterized in that**, with the first database comprising multi-spectral reflectance images, a second demosaicing matrix $D_2$ is defined by the expression:

$$D_2 = F^TCLS_1R'L_1^TC_1^TF_1M_1^T(M_1F_1^TC_1L_1R'L_1^TC_1^TF_1M_1^T)^{-1}$$ , with $$R' = \frac{1}{NHWP_\lambda}E^{i=1..N}\{z_1z_1^T\}$$ , the second demosaicing matrix $D_2$ being constructed according to the following steps:

• calculation of a vector matrix $y_0$ representing an image with $P$ components as a function of a vector matrix $z_0$ representing a multi-spectral reflectance image obtained from a reflection of an object illuminated by a light source of spectral power density $L(\lambda)$, $\lambda$ being a spectral component, such that: $$y_0 = F_0^TC_0L_0z_0$$ , where $F_0$ is a matrix of size $P_\lambda \times P$ of spectral transmission functions of the filters of the mosaic (3), $C_0$ is a diagonal matrix of size $P_\lambda \times P_\lambda$ of a spectral sensitivity of the sensor, $L_0$ is a diagonal matrix of size $P_\lambda \times P_\lambda$ of the spectral power densities of the light source;
• construction of the vector matrix $y$ starting from the multi-component image and a vector matrix $z$, constructed starting from the multi-spectral reflectance image, said vector matrices $y$ and $z$ comprising said base pattern, such that $y = F^TCLz$ with $F = I_{hw} \otimes F_0$, $I_{hw}$ being an identity matrix of dimensions $hw \times hw$, $C = I_{hw} \otimes C_0$, and $L = I_{hw} \otimes L_0$;
• construction of a vector matrix $z_1$ composed of the reduced neighbourhoods of size $n_h \times n_w$ of the base pattern of the multi-spectral reflectance image such that $$y_1 = F_1^TC_1L_1z_1$$ , $y_1$ being a matrix composed of the reduced neighbourhoods of size $n_h \times n_w$ of the base pattern of size $h \times w$ of the multi-spectral reflectance spectral image, with $F_1 = I_{n_hn_w} \otimes F_0$, $I_{n_hn_w}$ being an identity matrix of dimensions $n_hn_w \times n_hn_w$, $L_1 = I_{n_hn_w} \otimes L_0$ and $C_1 = I_{n_hn_w} \otimes C_0$;

• construction of the second demosaicing matrix $D_2$ with $M_1$ being a matrix of projection of $y_1$ onto $x_1$ and $S_1$ being a matrix of reduction of the neighbourhood of the vector $y_1$ and of transformation into $y$.

7. Method according to the preceding claim, **characterized in that** $C_0$ is a product of the spectral sensitivities of components of the camera's optical path and the spectral sensitivity of the sensor, said components comprising at least one of the following: an objective of the camera, an infrared filter, a low-pass spatial filter, a microlens system.

8. Method according to any one of the preceding claims, **characterized in that** each row of the demosaicing matrix $D$, $D_1$, $D_2$ is expressed as a convolution filter.

9. Data processing system comprising means for carrying out the steps of the method according to any one of the preceding claims.

10. Computer program product comprising instructions which, when the program is executed by a computer, lead the computer to carry out the steps of the method according to any one of claims 1 to 8.

11. Method for optimizing spectral functions of filters and arranging the filters (7) on a mosaic (3) of $P$ filters (7) of different colours, repeated so as to fill a base pattern (6) of size $h \times w$, said base pattern (6) being repeated so as to cover the mosaic of filters (3), said mosaic of filters (3) being applied to a photosensitive sensor (2), said method being **characterized in that** it comprises a multicriteria optimization by minimizing an error of colour rendering and by minimizing a mean square error between an image originating from an ideal sensor, acquired starting from an image of a database of reference images, and an image originating from a sensor covered with the mosaic (3) of $P$ different filters (7), acquired starting from the same image of the database of reference images, said image acquired by the sensor (2) covered with the mosaic (3) of filters (7) being reconstructed by the method according to any one of claims 1 to 7.

12. Method according to claim 11, **characterized in that** it further comprises minimizing an error of colour rendering between the image originating from the ideal sensor acquired starting from the image of the image database, and an image originating from a sensor covered with a series of $P$ filters, each of the $P$ filters covering the whole of the sensor, said image being acquired starting from the same image of the database.

13. Method according to claim 12, **characterized in that** it further comprises minimizing an error of colour rendering between a Macbeth test chart acquired by a perfect sensor and a Macbeth test chart acquired by a sensor provided with the mosaic of the $P$ filters.

14. Data processing system comprising means for carrying out the steps of the method according to claims 11 to 13.

15. Computer program product comprising instructions which, when the program is executed by a computer, cause the computer to carry out the steps of the method according to any one of claims 11 to 13.

FIG 1a

FIG 1b

FIG 2a

FIG 2b

$$M = \begin{bmatrix} 1 & 0 & 0 & 0 & 0 & 0 & 0 & 0 & 0 & 0 & 0 & 0 \\ 0 & 0 & 0 & 0 & 1 & 0 & 0 & 0 & 0 & 0 & 0 & 0 \\ 0 & 0 & 0 & 0 & 0 & 0 & 0 & 1 & 0 & 0 & 0 & 0 \\ 0 & 0 & 0 & 0 & 0 & 0 & 0 & 0 & 0 & 0 & 0 & 1 \end{bmatrix}$$

FIG 2c

FIG 2d

FIG 3

FIG 4a

FIG 4b

FIG 5

FIG 6a

FIG 6b

FIG 7

FIG 8

$$n_w$$
$$n_h$$
$$R(x', y', \lambda)$$

$$P_\lambda$$

XYZ$^T$L

$$\begin{array}{|c|c|} \hline 3 & z_{XYZ} \\ \hline \end{array}$$

A

$$\begin{array}{|c|c|} \hline 3 & z_{sRGB} \\ \hline \end{array}$$

$$\begin{array}{|c|c|c|} \hline P_\lambda & z_0 \\ & HW \\ \hline \end{array}$$

$$F_0^T C_0 L_0$$

$$\begin{array}{|c|c|} \hline P & y_0 \\ \hline \end{array}$$

FtoXYZ

$$\begin{array}{|c|c|} \hline 3 & y_{0XYZ} \\ \hline \end{array}$$

A

$$\begin{array}{|c|c|} \hline 3 & y_{0sRGB} \\ \hline \end{array}$$

$$\begin{array}{|c|c|} \hline P_\lambda n_h n_w & z_1 \\ & HW/(hw) \\ \hline \end{array}$$

$$M_1 F_1^T C_1 L_1$$

$$\begin{array}{|c|c|} \hline n_h n_w & x_1 \\ \hline \end{array}$$

$$D_0$$

$$\begin{array}{|c|c|} \hline P_\lambda n_h n_w & \tilde{y}_1 \\ \hline \end{array}$$

FtoXYZ

$$\begin{array}{|c|c|} \hline 3 & \tilde{y}_{XYZ} \\ \hline \end{array}$$

A

$$\begin{array}{|c|c|} \hline 3 & \tilde{y}_{sRGB} \\ \hline \end{array}$$

100

101

102

103

104

105

FIG 9

101

Acquisition 100

102

103

Démosaïçage 105

104

106

107

FIG 10

110

114

111

115

112

FIG 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2959092

- FR 2917559